(19) Europäisches Patentamt / European Patent Office / Office européen des brevets

(11) **EP 2 710 428 B1**

(12) **EUROPÄISCHE PATENTSCHRIFT**

(45) Veröffentlichungstag und Bekanntmachung des Hinweises auf die Patenterteilung:
**11.02.2015 Patentblatt 2015/07**

(21) Anmeldenummer: **12715536.4**

(22) Anmeldetag: **29.03.2012**

(51) Int Cl.:
**G02C 7/02** (2006.01)    **G02C 7/06** (2006.01)

(86) Internationale Anmeldenummer:
**PCT/EP2012/001443**

(87) Internationale Veröffentlichungsnummer:
**WO 2012/156007 (22.11.2012 Gazette 2012/47)**

(54) **VERFAHREN ZUR BERECHNUNG UND OPTIMIERUNG EINES BRILLENGLASES UNTER BERÜCKSICHTIGUNG VON ABBILDUNGSFEHLERN HÖHERER ORDNUNG**

METHOD FOR CALCULATING AND OPTIMIZING AN EYEGLASS LENS TAKING INTO CONSIDERATION HIGHER-ORDER IMAGING ERRORS

PROCÉDÉ DE CALCUL ET D'OPTIMISATION D'UN VERRE DE LUNETTES, EN TENANT COMPTE D'ABERRATIONS OPTIQUES D'ORDRE SUPÉRIEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2011 DE 102011101923**

(43) Veröffentlichungstag der Anmeldung:
**26.03.2014 Patentblatt 2014/13**

(73) Patentinhaber: **Rodenstock GmbH
80687 München (DE)**

(72) Erfinder:
• **ESSER, Gregor
  81735 München (DE)**
• **ALTHEIMER, Helmut
  87650 Baisweil-Lauchdorf (DE)**
• **BECKEN, Wolfgang
  81379 München (DE)**
• **UTTENWEILER, Dietmar
  82057 Icking (DE)**

(74) Vertreter: **Müller-Boré & Partner
Patentanwälte PartG mbB
Friedenheimer Brücke 21
80639 München (DE)**

(56) Entgegenhaltungen:
**WO-A1-2008/089999    DE-A1- 10 313 275**

• **ESSER G ET AL: "Derivation of the refraction equations for higher-order aberrations of local wavefronts at oblique incidence", JOURNAL OF THE OPTICAL SOCIETY OF AMERICA A, OPTICAL SOCIETY OF AMERICA, US, Bd. 27, Nr. 2, 1. Februar 2010 (2010-02-01), Seiten 218-237, XP007920240, ISSN: 1084-7529 in der Anmeldung erwähnt**

**Beschreibung**

Die vorliegende Erfindung betrifft ein Verfahren, eine Vorrichtung und ein entsprechendes Computerprogrammerzeugnis zur Berechnung (Optimierung) und Herstellung eines Brillenglases unter Berücksichtigung von Abbildungsfehlern höherer Ordnung sowohl des Auges als auch des Brillenglases.

Für die Herstellung bzw. Optimierung von Brillengläsern, insbesondere von individuellen Brillengläsern wird jedes Brillenglas so gefertigt, dass für jede gewünschte Blickrichtung oder jeden gewünschten Objektpunkt eine möglichst gute Korrektur eines Refraktionsfehlers des jeweiligen Auges des Brillenträgers erreicht wird. Im Allgemeinen gilt ein Brillenglas für eine gegebene Blickrichtung dann als vollkorrigierend, wenn die Werte Sphäre, Zylinder und Achse der Wellenfront beim Passieren der Scheitelpunktkugel mit den Werten für Sphäre, Zylinder und Achse der Verordnung für das fehlsichtige Auge übereinstimmen. Bei der Refraktionsbestimmung für ein Auge eines Brillenträgers werden dioptische Werte (insbesondere Sphäre, Zylinder, Achslage) für eine weite (i.d.R. unendliche) Entfernung und gegebenenfalls (für Mehrstärkengläser bzw. Gleitsichtgläser) eine Addition für eine nahe Entfernung (z.B. nach DIN 58208) bestimmt. Damit ist die Verordnung (insbesondere Sphäre, Zylinder, Achslage und gegebenenfalls Addition) festgelegt, die an einen Brillenglashersteller übermittelt wird. Bei modernen Brillengläsern können zusätzlich auch von der Norm abweichende Objektentfernungen, die bei der Refraktionsbestimmung verwendet wurden, angegeben werden.

Eine vollständige Korrektur für alle Blickrichtungen gleichzeitig ist aber im Normalfall nicht möglich. Daher werden die Brillengläser derart gefertigt, dass sie vor allem in den hauptsächlichen Nutzungsbereichen, insbesondere in den zentralen Durchblicksbereichen eine gute Korrektur von Fehlsichtigkeiten des Auges und nur geringe Abbildungsfehler bewirken, während in peripheren Bereichen größere Abbildungsfehler zugelassen werden.

Um ein Brillenglas derart fertigen zu können, erfolgt zunächst eine Berechnung der Brillenglasflächen bzw. zumindest einer der Brillenglasflächen derart, dass dadurch die gewünschte Verteilung der unvermeidlichen Abbildungsfehler bewirkt wird. Diese Berechnung und Optimierung erfolgt üblicherweise mittels eines iterativen Variationsverfahren durch Minimieren einer Zielfunktion. Als Zielfunktion wird insbesondere eine Funktion F mit folgendem funktionalen Zusammenhang zur sphärischen Wirkung S, zum Betrag der zylindrischen Wirkung Z und zur Achslage des Zylinders $\alpha$ (auch als "SZA"-Kombination bezeichnet) berücksichtigt und minimiert:

$$ F = \sum_{i=1}^{m} \left[ g_{i,S\Delta} \left( S_{\Delta,i} - S_{\Delta,i,Soll} \right)^2 + g_{i,Z\Delta} \left( Z_{\Delta,i} - Z_{\Delta,i,Soll} \right)^2 + ... \right]. $$

Dabei werden in der Zielfunktion F an den Bewertungsstellen i des Brillenglases zumindest die tatsächlichen Refraktionsdefizite der sphärischen Wirkung $S_{\Delta,i}$ und der zylindrischen Wirkung $Z_{\Delta,i}$ sowie Sollvorgaben für die Refraktionsdefizite der sphärischen Wirkung $S_{\Delta,i,Soll}$ und der zylindrischen Wirkung $Z_{\Delta,i,Soll}$ berücksichtigt.

Bereits in DE 103 13 275 wurde erkannt, dass es vorteilhaft ist, die Sollvorgaben nicht als absolute Werte der zu optimierenden Eigenschaften sondern als deren Abweichung von der Verordnung, also als geforderte Fehlanpassung anzugeben. Dies hat den Vorteil, dass die Sollvorgaben unabhängig von der Verordnung ($Sph_v$, $Zyl_v$, $Achse_v$, $Pr_v$, $B_v$) sind und die Sollvorgaben nicht für jede individuelle Verordnung geändert werden müssen. Als "Ist"-Werte der zu optimierenden Eigenschaften fließen in die Zielfunktion somit auch nicht absolute Werte dieser optischen Eigenschaften, sondern die Abweichungen von der Verordnung ein. Dies hat den Vorteil, dass die Sollvorgaben unabhängig von der Verordnung vorgegeben werden können und nicht für jede individuelle Verordnung geändert werden müssen.

Die jeweiligen Refraktionsdefizite an den jeweiligen Bewertungsstellen werden vorzugsweise mit Gewichtungsfaktoren $g_{i,S\Delta}$ bzw. $g_{i,Z\Delta}$ berücksichtigt. Dabei bilden die Sollvorgaben für die Refraktionsdefizite der sphärischen Wirkung $S_{\Delta,i,Soll}$ und/oder der zylindrischen Wirkung $Z_{\Delta,i,Soll}$ insbesondere zusammen mit den Gewichtungsfaktoren $g_{i,S\Delta}$ bzw. $g_{i,Z\Delta}$ das sogenannte Brillenglasdesign. Darüber hinaus können insbesondere auch weitere Residuen, insbesondere weitere zu optimierende Größen, wie z.B. Koma und/oder sphärische Aberration und/oder Prisma und/oder Vergrößerung und/oder anamorphotische Verzerrung, usw., berücksichtigt werden, was insbesondere durch den Ausdruck "+..." angedeutet ist.

In manchen Fällen kann es zu einer deutlichen Verbesserung insbesondere einer individuellen Anpassung eines Brillenglases beitragen, wenn bei der Optimierung des Brillenglases nicht nur Abbildungsfehler bis zur zweiten Ordnung (Sphäre, Betrag des Astigmatismus und Achslage), sondern auch höherer Ordnung (z.B. Koma, Dreiblattfehler, sphärische Aberration) berücksichtigt werden.

Es ist aus dem Stand der Technik bekannt, für optische Elemente und insbesondere für Brillengläser, die durch mindestens zwei brechende, refraktive Grenzflächen begrenzt sind, die Form einer Wellenfront zu bestimmen. Dies kann beispielsweise durch numerische Berechnung einer ausreichenden Anzahl an Nachbarstrahlen erfolgen, verbunden mit einem anschließenden Fit der Wellenfrontdaten durch Zernike-Polynome. Ein anderer Ansatz beruht auf einer lokalen Wellenfrontdurchrechnung bei der Refraktion (siehe WO 2008/089999 A1). Hierbei wird pro Durchblickpunkt nur ein einziger Strahl berechnet (der Hauptstrahl) und begleitend die Ableitungen der Pfeilhöhe der Wellenfront nach den transversalen (zum Hauptstrahl senkrechten) Koordinaten. Diese Ableitungen können bis zu einer bestimmten Ordnung gebildet werden, wobei die zweiten Ableitungen die lokalen Krümmungseigenschaften der Wellenfront (wie z.B. Brechwert, Astigmatismus) beschreiben und die höheren Ableitungen mit den Abbildungsfehlern höherer Ordnung zusammenhängen.

Bei einer Durchrechnung von Licht durch ein Brillenglas werden die lokalen Ableitungen der Wellenfront an einer geeigneten Position im Strahlverlauf berechnet, um sie dort mit erwünschten Werten, die aus der Refraktion des Brillenglasträgers hervorgehen, zu vergleichen. Diese Position kann beispielsweise die Scheitelpunktkugel sein. Hierzu wird angenommen, dass eine sphärische Wellenfront vom Objektpunkt ausgeht und bis zur ersten Brillenglasfläche propagiert. Dort wird die Wellenfront gebrochen und propagiert anschließend zur zweiten Brillenglasfläche, wo sie wieder gebrochen wird. Sollten weitere Flächen vorhanden sein, wird der Wechsel von Propagation und Brechung solange fortgesetzt bis die letzte Grenzfläche passiert ist. Die letzte Propagation findet dann von dieser letzten Grenzfläche bis zu der Scheitelpunktkugel statt.

WO 2008/089999 A1 legt die Gesetze für Brechung an refraktiven Flächen nicht nur für Abbildungsfehler bzw. optische Eigenschaften zweiter Ordnung sondern auch für höhere Ordnungen offen. Wenn eine Wellenfront mit bis zu einer bestimmten Ordnung bekannten lokalen Ableitungen unter schrägem Einfall auf eine Grenzfläche trifft, deren Pfeilhöhe selbst durch bekannte lokale Ableitungen bis zu derselben Ordnung beschrieben werden kann, dann können mit den Berechnungsverfahren nach WO 2008/089999 A1 die lokalen Ableitungen der ausfallenden Wellenfront bis zu der gleichen Ordnung berechnet werden. Eine solche Berechnung, insbesondere bis zur zweiten Ordnung, ist z.B. für die Beurteilung der Abbildungseigenschaften bzw. optischen Eigenschaften eines Brillenglases in Gebrauchsstellung sehr hilfreich. Insbesondere ist eine solche Berechnung von großer Bedeutung wenn ein Brillenglas in Gebrauchsstellung über alle Durchblickpunkte optimiert werden soll.

Auch wenn der Vorgang der Refraktion damit sehr effizient beschrieben und berechnet werden kann, bleibt die Berücksichtigung von Abbildungsfehlern höherer Ordnung dennoch sehr kostspielig, da insbesondere die erforderliche iterative Strahldurchrechnung für die Propagation der Wellenfronten sehr rechenaufwändig ist.

Aufgabe der Erfindung ist es, ein verbessertes Verfahren zum Berechnen oder Optimieren eines Brillenglases, vorzugsweise eines progressiven Brillenglases, anzugeben, wobei das Brillenglas besser an die individuellen Anforderungen des Brillenträgers angepasst ist. Diese Aufgabe wird durch ein computerimplementiertes Verfahren, eine Vorrichtung, ein Computerprogrammerzeugnis und ein Speichermedium mit den in den unabhängigen Ansprüchen angegebenen Merkmalen gelöst. Bevorzugte Ausführungsformen sind Gegenstand der abhängigen Ansprüche.

Gemäß einem ersten Aspekt bietet die Erfindung somit ein computerimplementiertes Verfahren zum Berechnen oder Optimieren eines Brillenglases. Das Verfahren umfasst zunächst ein Vorgeben zumindest einer Fläche für das zu berechnende bzw. optimierende Brillenglas. Diese Fläche dient insbesondere als Startfläche für die weitere individuelle Optimierung. Vorzugsweise handelt es sich hierbei um die Rückfläche des Brillenglases. Vorzugsweise werden sowohl fürl die Vorderfläche als auch für die Rückfläche des Brillenglases eine entsprechende Startfläche vorgegeben. In einer bevorzugten Ausführungsform wird während des Optimierungsverfahrens aber nur eine Fläche iterativ verändert bzw. optimiert. Die andere Fläche des Brillenglases kann zum Beispiel eine einfache sphärische oder rotationssymmetrische asphärische Fläche sein. Allerdings ist es auch möglich, beide Flächen zu optimieren.

Ausgehend von der zumindest einen vorgegebenen Fläche, umfasst das Verfahren ein Ermitteln des Verlaufs eines Hauptstrahls durch zumindest einen Durchblickpunkt ($i$) der zumindest einen Fläche. Besonders bevorzugt wird der Verlauf des Hauptstrahls ausgehend von einem Objektpunkt durch das Brillenglas hindurch bis zu einer Referenzfläche bzw. Auswertungsfläche bzw. Vergleichsfläche, insbesondere der Scheitelpunktkugel ermittelt.

An dem zumindest einen Durchblickpunkt ($i$) wird nun ein erster primärer Satz ($\mathbf{s}_{io}$) und ein zweiter primärer Satz ($\mathbf{e}_{iok}$) von Koeffizienten der lokalen Aberration einer von dem zumindest einen Durchblickpunkt ($i$) auslaufenden lokalen Wellenfront in einer Umgebung des Hauptstrahls ermittelt, wobei der erste primäre Satz von Koeffizienten ($\mathbf{s}_{io}$) die sphärische und astigmatische Aberration der auslaufenden lokalen Wellenfront und der zweite primäre Satz von Koeffizienten ($\mathbf{e}_{iok}$) zumindest eine weitere Aberration höherer Ordnung ($k > 2$) der auslaufenden lokalen Wellenfront festlegt. Die auslaufende Wellenfront (oder später auch ursprüngliche Wellenfront genannt) ist dabei das Resultat der Lichtbrechung an der zumindest einen Fläche. Falls es sich bei der einen Fläche um die Vorderfläche handelt, spiegelt die auslaufende Wellenfront vorzugsweise neben dem Objektabstand (und der damit verbundenen Vergenz der Wellenfront vor dem Auftreffen auf diese Fläche) die lokalen Brechungseigenschaften der Fläche wieder. Der Vorgang der Brechung könnte dabei insbesondere analog zu den Ausführungen in WO 2008/089999 A1 oder in J. Opt. Soc. Am. A 27, 218-237 ermittelt werden.

Die Erfindung schlägt nun außerdem vor, eine Funktion $\mathbf{e}_{pk} = f(\mathbf{e}_{ok})$ vorzugeben, welche einem zweiten primären Satz von Koeffizienten ($\mathbf{e}_{ok}$) einen zweiten sekundären Satz von Koeffizienten ($\mathbf{e}_{pk}$) zuordnet, der die zumindest eine Aberration höherer Ordnung einer propagierten Wellenfront festlegt. Insbesondere ist mit dieser Funktion sehr einfach möglich, die Propagation einer Wellenfront auf Basis von Koeffizienten der ursprünglichen Wellenfront zu ermitteln.

Somit umfasst das erfindungsgemäße Verfahren ein Ermitteln zumindest einer Aberration höherer Ordnung einer entlang des Hauptstrahls ausgehend von dem zumindest einen Durchblickpunkt ($i$) propagierten lokalen Wellenfront in Abhängigkeit von zumindest dem zweiten primären Satz von Koeffizienten ($e_{iok}$) anhand der vorgegebenen Funktion $\mathbf{e}_{pk} = f(\mathbf{e}_{ok})$. Insbesondere werden dazu ein erster und ein zweiter sekundärer Satz von Koeffizienten der propagierten Wellenfront ermittelt. Während die sphärische und die astigmatische Krümmung der Wellenfront, also der erste sekundäre Satz von Koeffizienten im Prinzip in bekannter Weise, insbesondere auf Basis des ersten primären Satzes von Koeffizienten bestimmt werden kann, schlägt die Erfindung eine sehr effiziente Methode vor, um auch den zweiten sekundären Satz von Koeffizienten zu ermitteln, ohne dafür auf eine aufwändige Strahldurchrechnung wie in herkömmlichen Verfahren angewiesen zu sein.

Zugunsten einer übersichtlichen Darstellung von Aspekten der Erfindung wird im Rahmen dieser Beschreibung folgende Terminologie für die Bezeichnung der Koeffizienten verwendet. Dabei werden die zur Beschreibung der auslaufenden (ursprünglichen), lokalen Wellenfront genutzten bzw. ermittelten Koeffizienten bzw. Sätze von Koeffizienten als "primäre" Koeffizienten bzw. "primäre" Sätze von Koeffizienten bezeichnet. Dementsprechend werden die zur Beschreibung der propagierten, lokalen Wellenfront genutzten bzw. ermittelten Koeffizienten bzw. Sätze von Koeffizienten als "sekundäre" Koeffizienten bzw. "sekundäre" Sätze von Koeffizienten bezeichnet. Außerdem werden die zur Beschreibung der sphärischen und astigmatischen Aberration der jeweiligen lokalen Wellenfront genutzten bzw. ermittelten Koeffizienten bzw. Sätze von Koeffizienten als "erste" Koeffizienten bzw. "erste" Sätze von Koeffizienten bezeichnet, während die zur Beschreibung der von den sphärischen und astigmatischen Aberrationen abweichenden (also darüber hinausgehenden) Aberrationen, d.h. Aberrationen höherer Ordnung, genutzten bzw. ermittelten Koeffizienten bzw. Sätze von Koeffizienten als "zweite" Koeffizienten bzw. "zweite" Sätze von Koeffizienten bezeichnet werden.

Nachdem nun der durch die Brechung entstehende Einfluss des Brillenglases auf die Wellenfront sehr effizient auch für Aberrationen höherer Ordnung ermittelt wurde (wie etwa in WO 2008/089999 A1 oder in J. Opt. Soc. Am. A 27, 218-237 beschrieben), umfasst das erfindungsgemäße Verfahren nun ein Berechnen oder Optimieren der zumindest einen Fläche des Brillenglases unter Berücksichtigung der ermittelten Aberration bzw. Aberrationen höherer Ordnung der propagierten lokalen Wellenfront. Vorzugsweise erfolgt dazu an der Scheitelpunktkugel ein Vergleich der von dem zu optimierenden Brillenglas bewirkten Beeinflussung der Wellenfront mit der geforderten Verordnung unter Berücksichtigung von Aberrationen höherer Ordnung. Je nach Abweichung wird zumindest eine der Flächen des Brillenglases variiert und der Vorgang entsprechend wiederholt bis das Brillenglas nahe genug an die geforderte Wirkung herankommt.

Damit ermöglicht die Erfindung, eine sehr schnelle und genaue Berücksichtigung von Aberrationen höherer Ordnung mit deutlich reduziertem Rechenaufwand. Damit kann ohne wesentliche Steigerung des Rechenaufwands eine Verbesserung der individuellen Anpassung eines Brillenglases erreicht werden.

Das Vorgeben zumindest einer Funktion $\mathbf{e}_{pk} = f(\mathbf{e}_{ok})$ umfasst ein Vorgeben einer linearen Funktion $\mathbf{e}_{pk} = \mathbf{B}_k (\mathbf{e}_{ok} + \mathbf{r}_k)$ bzw. die Funktion $\mathbf{e}_{pk} = f(\mathbf{e}_{ok})$ wird als eine lineare Funktion $\mathbf{e}_{pk} = \mathbf{B}_k (\mathbf{e}_{ok} + \mathbf{r}_k)$ vorgegeben, in der der Proportionalitätsterm $\mathbf{B}_k$ vom ersten primären Satz von Koeffizienten ($\mathbf{s}_{iO}$), nicht aber vom zweiten primären Satz von Koeffizienten ($\mathbf{e}_{ok}$) abhängt. Vorzugsweise hängt auch der Restterm $\mathbf{r}_k$ nicht vom zweiten primären Satz von Koeffizienten ($\mathbf{e}_{ok}$) ab. Besonders bevorzugt gilt dabei sogar $\mathbf{r}_k = 0$, also $\mathbf{e}_{pk} = \mathbf{B}_k \mathbf{e}_{ok}$. Diese Ausführungsformen führen insbesondere für die Berücksichtigung von Abbildungsfehlern dritter Ordnung ($k = 3$) zu einer sehr effizienten Optimierung.

Für eine besonders effiziente Berücksichtigung von Abbildungsfehlern dritter Ordnung (z.B. Koma) ist es bevorzugt, wenn das Ermitteln eines ersten primären Satzes von Koeffizienten ein Ermitteln eines Powervektors

$$\mathbf{s}_o = \begin{pmatrix} S_{oxx} \\ S_{oxy} \\ S_{oyy} \end{pmatrix}$$

umfasst, wobei das Ermitteln eines zweiten primären Satzes von Koeffizienten ein Ermitteln eines

Komavektors $\mathbf{e}_{o3} = \begin{pmatrix} E_{oxxx} \\ E_{oxxy} \\ E_{oxyy} \\ E_{oyyy} \end{pmatrix}$ umfasst, und wobei als zumindest eine Funktion $\mathbf{e}_{p3} = f(\mathbf{e}_{o3})$ die Funktion

$$\mathbf{e}_{p3} = \mathbf{B}_3\mathbf{e}_{o3} = \gamma^3 \begin{pmatrix} \beta_y^{-3} & 3\beta_y^{-2}\,{}^d\!/_n S_{xy} & 3\beta_y^{-1}({}^d\!/_n S_{xy})^2 & ({}^d\!/_n S_{xy})^3 \\ \beta_y^{-2}\,{}^d\!/_n S_{xy} & \beta_y^{-1}({}^1\!/_\gamma + 3({}^d\!/_n S_{xy})^2) & {}^2\!/_\gamma\,{}^d\!/_n S_{xy} + 3({}^d\!/_n S_{xy})^3 & \beta_x^{-1}({}^d\!/_n S_{xy})^2 \\ \beta_y^{-1}({}^d\!/_n S_{xy})^2 & {}^2\!/_\gamma\,{}^d\!/_n S_{xy} + 3({}^d\!/_n S_{xy})^3 & \beta_x^{-1}({}^1\!/_\gamma + 3({}^d\!/_n S_{xy})^2) & \beta_x^{-2}\,{}^d\!/_n S_{xy} \\ ({}^d\!/_n S_{xy})^3 & 3\beta_x^{-1}({}^d\!/_n S_{xy})^2 & 3\beta_x^{-2}\,{}^d\!/_n S_{xy} & \beta_x^{-3} \end{pmatrix} \mathbf{e}_{o3}$$

mit $\quad \gamma = \dfrac{1}{1 - {}^d\!/_n S_{oxx} - ({}^d\!/_n S_{oxy})^2 - {}^d\!/_n S_{oyy} + ({}^d\!/_n)^2 S_{oxx} S_{oyy})} \quad , \quad \beta_x = \dfrac{1}{1 - {}^d\!/_n S_{oxx}} \quad$ und

$\beta_y = \dfrac{1}{1 - {}^d\!/_n S_{oyy}}$ vorgegeben wird.

In einer bevorzugten Ausführungsform umfasst das Ermitteln des zweiten primären Satzes von Koeffizienten ($\mathbf{e}_{iok}$) ein Ermitteln zumindest einer Vielzahl von primären Teüsätzen ($\mathbf{e}_{iok}$, für $k=3,4,...$) des zweiten primären Satzes von Koeffizienten ($\mathbf{e}_{iok}$). Dabei umfasst das Vorgeben zumindest einer Funktion $\mathbf{e}_{pk} = f(\mathbf{e}_{ok})$ vorzugsweise ein Vorgeben einer linearen Funktion $\mathbf{e}_{pk} = \mathbf{B}_k(\mathbf{e}_{ok} + \mathbf{r}_k)$ für jeden Teilsatz (also für jedes $k = 3,4,...$) derart, dass für jede der linearen Funktionen (also für jedes $k = 3,4,...$) der Proportionalitätsterm $\mathbf{B}_k$ vom ersten primären Satz von Koeffizienten ($\mathbf{s}_{io}$), nicht aber vom zweiten primären Satz von Koeffizienten ($\mathbf{e}_{ok}$) abhängt. Vorzugsweise hängt auch der Restterm $\mathbf{r}_{k_0}$ einer linearen Funktion zum Teilsatz der Ordnung $k_0$ nicht von den Koeffizienten des jeweiligen Teilsatzes $k_0$ ab, sondern höchstens von Koeffizienten des vorangegangenen Teilsatzes bzw. der vorangegangenen Teilsätze (also den Koeffizienten der Ordnung $k < k_0$). Dazu werden die Teilsätze ($\mathbf{e}_{iok}$, für $k = 3,4,...$) des zweiten primären Satzes von Koeffizienten ($\mathbf{e}_{iok}$) vorzugsweise derart ermittelt, dass sie eine Reihe aufeinander folgender Teilsätze in einer bestimmten bzw. bestimmbaren Reihenfolge aufsteigender Ordnungen bilden. Insbesondere repräsentiert darin jeder Teilsatz Abbildungsfehler der entsprechenden Ordnung, welche beispielsweise der Ordnung ($k = 3,4,...$) zugehöriger Zernike-Polynome der jeweiligen Abbildungsfehler entspricht.

In einer besonders bevorzugten Ausführungsform umfasst das Ermitteln des zweiten primären Satzes von Koeffizienten ($\mathbf{e}_{iok}$) ein Ermitteln zumindest eines ersten primären Teilsatzes ($\mathbf{e}_{io3}$) und eines zweiten primären Teilsatzes ($\mathbf{e}_{io4}$) des zweiten primären Satzes von Koeffizienten ($\mathbf{e}_{iok}$). Dabei umfasst das Vorgeben zumindest einer Funktion $\mathbf{e}_{pk} = f(\mathbf{e}_{ok})$ vorzugsweise ein Vorgeben einer ersten linearen Funktion $\mathbf{e}_{p3} = \mathbf{B}_3(\mathbf{e}_{o3} + \mathbf{r}_3)$, in der der Proportionalitätsterm $\mathbf{B}_3$ vom ersten primären Satz von Koeffizienten ($\mathbf{s}_{io}$), nicht aber vom zweiten primären Satz von Koeffizienten abhängt. Vorzugsweise hängt auch der Restterm $\mathbf{r}_3$ nicht vom zweiten primären Satz von Koeffizienten ab. Besonders bevorzugt gilt dabei sogar $\mathbf{r}_3 = 0$, also $\mathbf{e}_{p3} = \mathbf{B}_3\mathbf{e}_{o3}$. Außerdem umfasst das Vorgeben zumindest einer Funktion $\mathbf{e}_{pk} = f(\mathbf{e}_{ok})$ in dieser Ausführungsform vorzugsweise ein Vorgeben einer zweiten linearen Funktion $\mathbf{e}_{p4} = \mathbf{B}_4(\mathbf{e}_{o4} + r4)$, in der der Proportionalitätsterm $\mathbf{B}_4$ vom ersten primären Satz von Koeffizienten ($\mathbf{s}_{io}$), nicht aber vom zweiten primären Satz von Koeffizienten abhängt. Vorzugsweise hängt der Restterm $\mathbf{r}_4$ nicht vom zweiten primären Teilsatz ($\mathbf{e}_{io4}$) des zweiten primären Satzes von Koeffizienten ($\mathbf{e}_{ok}$) ab. Dies führt insbesondere für die Berücksichtigung von Abbildungsfehlern vierter Ordnung ($k = 4$) zu einer sehr effizienten Optimierung. Besonders bevorzugt hängt der Restterm $\mathbf{r}_4$ der zweiten linearen Funktion aber vom ersten primären Teilsatz ($\mathbf{e}_{io3}$) des zweiten primären Satzes von Koeffizienten ab.

Für eine besonders effiziente Berücksichtigung von Abbildungsfehlern vierter Ordnung (z.B. sphärische Aberration) ist es bevorzugt, wenn das Ermitteln eines ersten primären Satzes von Koeffizienten ein Ermitteln eines Powervektors $\mathbf{s}_o = \begin{pmatrix} S_{oxx} \\ S_{oxy} \\ S_{oyy} \end{pmatrix}$ umfasst, wobei das Ermitteln eines zweiten primären Satzes von Koeffizienten ein Ermitteln

eines Komavektors $\mathbf{e}_{o3} = \begin{pmatrix} E_{oxxx} \\ E_{oxxy} \\ E_{oxyy} \\ E_{oyyy} \end{pmatrix}$ und ein Ermitteln eines Sphärische-Aberration-Vektors $\mathbf{e}_{o4} = \begin{pmatrix} E_{oxxxx} \\ E_{oxxxy} \\ E_{oxxyy} \\ E_{oxyyy} \\ E_{oyyyy} \end{pmatrix}$ um-

fasst, und

wobei als zumindest eine Funktion $\mathbf{e}_{pk} = f(\mathbf{e}_{ok})$ die Funktion

$$\mathbf{e}_{p4} = \begin{pmatrix} \beta_x^4 & \cdots & & \cdots & 0 \\ \vdots & \beta_x^3 \beta_y^1 & & & \vdots \\ & & \beta_x^2 \beta_y^2 & & \\ \vdots & & & \beta_x^1 \beta_y^3 & \vdots \\ 0 & & & \cdots & \beta_y^4 \end{pmatrix}$$

$$\left( \mathbf{e}_{o4} + \frac{d}{n} \left( \begin{array}{c} 3\left( \beta_x E_{oxxx}^2 + \beta_y E_{oxxy}^2 - \dfrac{S_{oxx}^4}{n^2} \right) \\ 3 E_{oxxy}\left( \beta_x E_{oxxx} + \beta_y E_{oxyy} \right) \\ \beta_x(2E_{oxxy}^2 + E_{oxxx}E_{oxyy}) + \beta_y(2E_{oxyy}^2 + E_{oxxy}E_{oyyy}) - \left( \dfrac{S_{oxx}S_{oyy}}{n} \right)^2 \\ 3 E_{oxyy}\left( \beta_x E_{oxxy} + \beta_y E_{oyyy} \right) \\ 3\left( \beta_x E_{oxyy}^2 + \beta_y E_{oyyy}^2 - \dfrac{S_{oyy}^4}{n^2} \right) \end{array} \right) \right)$$

mit $\beta_x = \dfrac{1}{1 - \frac{d}{n}S_{oxx}}$ und $\beta_y = \dfrac{1}{1 - \frac{d}{n}S_{oyy}}$ vorgegeben wird. Die Koeffizienten des Komavektors bilden dabei insbesondere den ersten primären Teilsatz und die Koeffizienten des Sphärische-Aberration-Vektors bilden insbesondere den zweiten primären Teilsatz des zweiten primären Satzes von Koeffizienten.

Vorzugsweise umfasst das Verfahren außerdem ein Bestimmen eines Winkels $\alpha$ zwischen einer ersten Brechungsebene des Hauptstrahls an einer ersten Fläche des Brillenglases und einer zweiten Brechungsebene des Hauptstrahls an einer zweiten Fläche des Brillenglases, wobei das Ermitteln einer Aberration höherer Ordnung umfasst

- Ermitteln eines zweiten sekundären Satzes ($\mathbf{e}_{ipk}$) von Koeffizienten der lokalen Aberration der propagierten Wellenfront; und
- Ermitteln eines transformierten zweiten sekundären Satzes ($\tilde{\mathbf{e}}_{ipk}$) von Koeffizienten in Abhängigkeit vom bestimmten Winkel $\alpha$, insbesondere durch Anwenden einer Rotationsmatrix $\mathbf{R}_K(\alpha)$. Damit kann für jeden Brechungsschritt ein kartesisches Koordinatensystem vorzugsweise so gewählt werden, dass eine Achse eines kartesischen Koordinatensystem senkrecht zur Brechungsebene liegt und beim Übergang durch die brechende Fläche unverändert bleibt, was zu einer einfacheren Berechung des Brechungsvorgangs führt.

Vorzugsweise umfasst das Verfahren außerdem ein Erfassen von Verordnungs- bzw. Refraktionsdaten V, wobei die Verordnungsdaten Daten bezüglich der sphärischen Wirkung $Sph_V$, des Betrags des Astigmatismus $Zyl_V$, der Astigmatismusachse $Achse_V$ sowie zumindest einer weiteren vorgegebenen Refraktion höherer Ordnung $HOA_V$ umfassen.

Vorzugsweise umfasst das Verfahren ein Minimieren einer Zielfunktion in der Werte von Abbildungsfehlern höherer Ordnung explizit berücksichtigt werden, z.B. in Form von

$$\min F = \sum_i G_{R,i}\left(R_{Ist}(i) - R_{Soll}(i)\right)^2 + G_{A,i}\left(A_{Ist}(i) - A_{Soll}(i)\right)^2 + G_{C,i}\left(C_{Ist}(i) - C_{Soll}(i)\right)^2$$
$$+ G_{S,i}\left(S_{Ist}(i) - S_{Soll}(i)\right)^2 + \ldots$$

$R_{Ist}(i)$     tatsächlicher Refraktionsfehler (Differenz Brillenglas und Auge) an der i-ten Bewertungsstelle

$R_{soll}(i)$     geforderter Refraktionsfehler an der i-ten Bewertungsstelle

$G_{R,i}$     Gewichtung des Refraktionsfehlers an der i-ten Bewertungsstelle

$A_{Ist}(i)$     tatsächliche astigmatische Differenz (Differenz Brillenglas und Auge) an der i-ten Bewertungsstelle

$A_{soll}(i)$     geforderte astigmatische Differenz an der i-ten Bewertungsstelle

$G_{A,i}$     Gewichtung der astigmatischen Differenz an der i-ten Bewertungsstelle

und zusätzlich

$C_{Ist}(i)$     tatsächliche Differenz der Coma des Brillenglases und des Auges an der i-ten Bewertungsstelle

$C_{soll}(i)$     geforderte Differenz der Coma an der i-ten Bewertungsstelle

$G_{C,i}$     Gewichtung der Coma an der i-ten Bewertungsstelle

$S_{Ist}(i)$     tatsächliche Differenz der sphärischen Aberration des Brillenglases und des Auges an der i-ten Bewertungsstelle

$S_{Soll}(i)$     geforderte Differenz der sphärischen Aberration an der i-ten Bewertungsstelle

$G_{S,i}$     Gewichtung der sphärischen Aberration an der i-ten Bewertungsstelle

Bei einer Erweiterung der Zielfunktion erhöht sich jedoch der Grad der Überbestimmung, wodurch sich in einigen Fällen die Stabilität des Optimierungsverfahrens verschlechtern kann. Daher ist es bevorzugt, wenn die Zielfunktion nicht erweitert wird, wenn also die Abbildungsfehler höherer Ordnung nicht explizit in die Zielfunktion einfließen, sondern wenn sowohl die Abbildungsfehler höherer Ordnung des Auges als auch des Brillenglases in die jeweiligen sphäro-zylindrischen Werte einfließen. Vorzugsweise umfasst das Verfahren in diesem Fall ein Minimieren einer Zielfunktion in der Werte von Abbildungsfehlern höherer Ordnung implizit über transformierte Werte des Refraktionsfehlers und der astigmatischen Differenz berücksichtigt werden, z.B. in Form von

$$\min F = \sum_i G_{R,i}\left(R_{Ist,t}(i) - R_{Soll}(i)\right)^2 + G_{A,i}\left(A_{Ist,t}(i) - A_{Soll}(i)\right)^2$$

$R_{Ist,t}(i)$     transformierter Refraktionsfehler (Differenz Brillenglas und Auge) an der i-ten Bewertungsstelle

$R_{soll}(i)$     geforderter Refraktionsfehler an der i-ten Bewertungsstelle

$G_{R,i}$     Gewichtung des Refraktionsfehlers an der i-ten Bewertungsstelle

$A_{Ist,t}(i)$     transformierte astigmatische Differenz (Differenz Brillenglas und Auge) an der i-ten Bewertungsstelle

$A_{soll}(i)$     geforderte astigmatische Differenz an der i-ten Bewertungsstelle

$G_{A,i}$     Gewichtung der astigmatischen Differenz an der i-ten Bewertungsstelle

In einer bevorzugten Ausführungsform umfasst das Verfahren ein Ermitteln eines transformierten ersten sekundären Satzes von Koeffizienten aus dem ersten sekundären Satz von Koeffizienten und dem zweiten sekundären Satz von Koeffizienten. Insbesondere wird für jeden ersten sekundären Koeffizienten aus dem Satz von ersten sekundären Koeffizienten in Abhängigkeit von zumindest einem Koeffizienten aus dem zweiten sekundären Satz von Koeffizienten, also in Abhängigkeit von zumindest einem Abbildungsfehler höherer Ordnung, ein transformierter erster sekundärer Koeffizient ermittelt. Die transformierten ersten sekundären Koeffizienten legen dann insbesondere die transformierte sphäro-zylindrische Refraktion zumindest teilweise fest.

Um anzugeben, wie die transformierte sphäro-zylindrische Refraktion (in Minus-Zylinder-Schreibweise) von den Abbildungsfehlern höherer Ordnung in bevorzugten Ausführungsformen abhängt, werden vorzugsweise folgende Funktionen bereitgestellt:

$$sph(u,v,w;r_0) = \frac{4\sqrt{3}}{r_0^2}\left(u + \frac{\sqrt{2}\sqrt{v^2+w^2}}{2}\right)$$

$$zyl(v,w;r_0) = -\frac{4\sqrt{3}}{r_0^2}\sqrt{2}\sqrt{v^2+w^2}$$

$$a(v,w;r_0) = \frac{1}{2}\arctan(w,v)$$

mit

$$\arctan(x,y) := \begin{cases} \arctan(y/x) & , \quad x > 0 \\ \arctan(y/x) + \pi, & x < 0, y > 0 \\ \pi, & x < 0, y = 0 \\ \arctan(y/x) - \pi, & x < 0, y < 0 \end{cases}$$

In einer Ausführungsform, in der die Abbildungsfehler höherer Ordnung zumindest nicht explizit zur Transformation der sphäro-zylindrischen Werte herangezogen werden, wird eine transformierte Refraktion vorzugsweise gegeben durch:

$$Sph\left(c_2^0, c_2^{-2}, c_2^2, \{c_n^m\}; r_0\right) = sph\left(c_2^0, c_2^{-2}, c_2^2; r_0\right)$$

$$Zyl\left(c_2^0, c_2^{-2}, c_2^2, \{c_n^m\}; r_0\right) = zyl\left(c_2^{-2}, c_2^2; r_0\right)$$

$$A\left(c_2^0, c_2^{-2}, c_2^2, \{c_n^m\}; r_0\right) = a\left(c_2^{-2}, c_2^2; r_0\right),$$

wobei die $c_2^0, c_2^{-2}, c_2^2$ Zernike-Koeffizienten zweiter Ordnung und $c_n^m$ mit $n{\geq}3$ Zernike-Koeffizienten höherer Ordnung der Wellenfront in der Notation des OSA-Standards darstellen, siehe z.B. Jason Porter et al. "Adaptive Optics for Vision Science", Wiley (2006), S. 522. Die Größe $r_0$ steht für den Pupillenradius. Dazu umfasst das Verfahren vorzugsweise ein Erfassen eines Pupillenradius $r_0$. Außerdem umfasst das Verfahren vorzugsweise ein Ermitteln von Zernike-Koeffizienten zweiter Ordnung $(c_2^0, c_2^{-2}, c_2^2)$.

Eine bevorzugte Ausführungsform unter Berücksichtigung der Abbildungsfehler höherer Ordnung bei der Bestimmung der transformierten sphäro-zylindrischen Refraktion, also bei einer Transformation der sphäro-zylindrischen Werte in Abhängigkeit von den zweiten, sekundären Koeffizienten, ist gegeben durch:

$$Sph\left(c_2^0, c_2^{-2}, c_2^2, \{c_n^m\}\right) = sph\left(c_2^0, c_2^{-2} + \sqrt{5/3}c_4^{-2}, c_2^2 + \sqrt{5/3}c_4^2\right)$$

$$Zyl\left(c_2^0, c_2^{-2}, c_2^2, \{c_n^m\}\right) = zyl\left(c_2^{-2} + \sqrt{5/3}c_4^{-2}, c_2^2 + \sqrt{5/3}c_4^2\right)$$

$$A\left(c_2^0, c_2^{-2}, c_2^2, \{c_n^m\}\right) = a\left(c_2^{-2} + \sqrt{5/3}c_4^{-2}, c_2^2 + \sqrt{5/3}c_4^2\right)$$

Eine weitere, dazu alternative bevorzugte Ausführungsform ist gegen durch:

$$Sph\left(c_2^0, c_2^{-2}, c_2^2, \{c_n^m\}\right) = sph\left(c_2^0 + \sqrt{5/3}c_4^0, c_2^{-2} + \sqrt{5/3}c_4^{-2}, c_2^2 + \sqrt{5/3}c_4^2\right)$$
$$Zyl\left(c_2^0, c_2^{-2}, c_2^2, \{c_n^m\}\right) = zyl\left(c_2^{-2} + \sqrt{5/3}c_4^{-2}, c_2^2 + \sqrt{5/3}c_4^2\right)$$
$$A\left(c_2^0, c_2^{-2}, c_2^2, \{c_n^m\}\right) = a\left(c_2^{-2} + \sqrt{5/3}c_4^{-2}, c_2^2 + \sqrt{5/3}c_4^2\right)$$

Eine weitere bevorzugte Ausführungsform ist gegen durch:

$$Sph\left(c_2^0, c_2^{-2}, c_2^2, \{c_n^m\}\right) = sph\left(c_2^0 + 2\sqrt{15}c_4^0, c_2^{-2} + 3\sqrt{15}c_4^{-2}, c_2^2 + 3\sqrt{15}c_4^2\right)$$

$$Zyl\left(c_2^0, c_2^{-2}, c_2^2, \{c_n^m\}\right) = zyl\left(c_2^{-2} + 3\sqrt{15}c_4^{-2}, c_2^2 + 3\sqrt{15}c_4^2\right)$$

$$A\left(c_2^0, c_2^{-2}, c_2^2, \{c_n^m\}\right) = a\left(c_2^{-2} + 3\sqrt{15}c_4^{-2}, c_2^2 + 3\sqrt{15}c_4^2\right)$$

Etwas allgemeiner ist eine bevorzugte Ausführungsform gegeben durch die Funktionen:

$$Sph\left(c_2^0, c_2^{-2}, c_2^2, \{c_n^m\}\right) = sph\left(c_2^0 + \Delta c_2^0, c_2^{-2} + \Delta c_2^{-2}, c_2^2 + \Delta c_2^2\right)$$

$$Zyl\left(c_2^0, c_2^{-2}, c_2^2, \{c_n^m\}\right) = zyl\left(c_2^{-2} + \Delta c_2^{-2}, c_2^2 + \Delta c_2^2\right)$$

$$A\left(c_2^0, c_2^{-2}, c_2^2, \{c_n^m\}\right) = a\left(c_2^{-2} + \Delta c_2^{-2}, c_2^2 + \Delta c_2^2\right)$$

bei denen die Änderungen $\Delta c_2^0$, $\Delta c_2^{-2}$, $\Delta c_2^2$ Funktionen (insbesondere stetige Funktionen) der Zernikekoeffizienten $c_n^m$ höherer Ordnung der Wellenfunktion sind, wobei $n \geq 3$ ist.

Vorzugsweise umfasst das Erfassen von Verordnungsdaten ein Erfassen von ersten Verordnungsdaten für eine erste Objektentfernung und von zweiten Verordnungsdaten für eine zweite Objektentfernung. Insbesondere kann damit der Einfluss der Objektentfernung auf die Pupillengröße individuell berücksichtigt werden. So wirkt sich eine veränderte Pupillengröße vor allem auf die Abbildungsfehler höherer Ordnung aus.

Vorzugsweise umfasst das Verfahren außerdem:

- ein Vorgeben eines Objektabstandsmodells A1(*x, y*), wobei *A*1 die Objektentfernung und (*x, y*) eine Durchblickstelle bzw. einen Durchblickspunkt des Brillenglases in einer vorgegebenen oder vorgebbaren Blickrichtung bezeichnen;
- ein Vorgeben einer Funktion $r_0 = g(A1)$, welche die Abhängigkeit einer Pupillengröße $r_0$ von der Objektentfernung A1 beschreibt;

- ein Ermitteln einer Pupillengröße für den zumindest einen Hauptstrahl (10) anhand des Objektabstandsmodells A1(x, y) und der vorgegebenen Funktion $r_0 = g(A1)$.

Vorzugsweise ist das zu optimierende Brillenglas ein progressives Brillenglas.

In einem weiteren Aspekt bietet die Erfindung eine Vorrichtung zum Berechnen und Optimieren eines Brillenglases umfassend:

- eine Flächenmodelldatenbank zum Vorgeben zumindest einer Fläche für das zu berechnende bzw. optimierende Brillenglas;
- Hauptstrahlermittlungsmittel zum Ermitteln des Verlaufs eines Hauptstrahls (10) durch zumindest einen Durchblickpunkt ($i$) der zumindest einen Fläche;
- Primärkoeffizientenermittlungsmittel zum Ermitteln eines ersten primären Satzes ($s_{io}$) und eines zweiten primären Satzes ($e_{iok}$) von Koeffizienten der lokalen Aberration einer von dem zumindest einen Durchblickpunkt ($i$) auslaufenden lokalen Wellenfront (18) in einer Umgebung des Hauptstrahls (10), wobei der erste primäre Satz von Koeffizienten ($s_{io}$) die sphärische und astigmatische Aberration der auslaufenden lokalen Wellenfront und der zweite primäre Satz von Koeffizienten ($e_{iok}$) eine weitere Aberration höherer Ordnung (k > 2) der auslaufenden lokalen Wellenfront festlegt;
- eine Propagationsmodelldatenbank zum Vorgeben zumindest einer Funktion $\mathbf{e}_{pk} = f(\mathbf{e}_{ok})$, welche einem zweiten primären Satz von Koeffizienten ($e_{ok}$) einen zweiten sekundären Satz von Koeffizienten ($\mathbf{e}_{pk}$) zuordnet, der die Aberration höherer Ordnung einer propagierten Wellenfront festlegt;
- Sekundärkoeffizientenermittlungsmittel zum Ermitteln einer Aberration höherer Ordnung einer entlang der Hauptstrahls (10) ausgehend von dem zumindest einen Durchblickpunkt ($i$) propagierten lokalen Wellenfront in Abhängigkeit von zumindest dem zweiten primären Satz von Koeffizienten ($e_{iok}$) anhand der vorgegebenen Funktion $\mathbf{e}_{pk}$ $f(\mathbf{e}_{ok})$; und
- Berechnungs- oder Optimierungsmittel, welche ausgelegt sind, die zumindest eine Fläche des Brillenglases unter Berücksichtigung der ermittelten Aberration höherer Ordnung der propagierten lokalen Wellenfront zu berechnen oder zu optimieren.

Außerdem bietet die Erfindung ein Computerprogrammerzeugnis, welches ausgelegt ist, wenn geladen und ausgeführt auf einem Computer, ein Verfahren zum Berechnen oder Optimieren eines Brillenglases gemäß der vorliegenden Erfindung insbesondere in einer bevorzugten Ausführungsform durchzuführen.

Außerdem bietet die Erfindung ein Speichermedium mit darauf gespeichertem Computerprogramm, wobei das Computerprogramm ausgelegt ist, wenn geladen und ausgeführt auf einem Computer, ein Verfahren zum Berechnen oder Optimieren eines Brillenglases gemäß der vorliegenden Erfindung insbesondere in einer bevorzugten Ausführungsform durchzuführen.

Außerdem bietet die Erfindung ein Verfahren zum Herstellen eines Brillenglases umfassend:

Berechnen oder Optimieren eines Brillenglases nach dem Verfahren zum Berechnen oder Optimieren eines Brillenglases gemäß der vorliegenden Erfindung insbesondere in einer bevorzugten Ausführungsform;

Fertigen des so berechneten oder optimierten Brillenglases.

Außerdem bietet die Erfindung eine Vorrichtung zum Herstellen eines Brillenglases umfassend:

Berechnungs- oder Optimierungsmittel, welche ausgelegt sind, das Brillenglas nach einem Verfahren zum Berechnen oder Optimieren eines Brillenglases gemäß der vorliegenden Erfindung insbesondere in einer bevorzugten Ausführungsform zu berechnen oder zu optimieren;

Bearbeitungsmittel, welche ausgelegt sind, das Brillenglas fertig zu bearbeiten.

Außerdem bietet die Erfindung eine Verwendung eines nach dem Herstellungsverfahren gemäß der vorliegenden Erfindung insbesondere in einer bevorzugten Ausführungsform hergestellten Brillenglases in einer vorgegebenen durchschnittlichen oder individuellen Gebrauchsstellung des Brillenglases vor den Augen eines bestimmten Brillenträgers zur Korrektur einer Fehlsichtigkeit des Brillenträgers.

Bevorzugte Ausführungsformen der Erfindung werden nachfolgend unter Bezugnahme auf die beigefügten Zeichnungen beispielhaft erläutert. Dabei zeigen:

Fig. 1    eine schematische Darstellung des phyiologischen und phyikalischen Modells eines Brillenglases zusammen mit einem Strahlverlauf in einer vorgegebenen Gebrauchsstellung;

Fig. 2    eine schematische Darstellung eines Koordinatensystems mit einer ursprünglichen Wellenfront und einer propagierten Wellenfront;

Fig. 3    eine schematische Darstellung einer sphärischen Wellenfront mit einer Vergenzdistanz $s_o$ in einem Abstand $d$ von einer propagierten Wellenfront mit der Vergenzdistanz $s_p$;

Fig. 4    eine schematische Darstellung der Vorgangs der Propagation einer Wellenfront;

Fig. 5    eine schematische Darstellung lokaler Koordinatensysteme einer brechenden Fläche, einer einlaufenden und einer auslaufenden Wellenfront; und

Fig. 6    ein Flussdiagramm zur Veranschaulichung eines Verfahrens zum Optimieren eines individuellen Brillenglases gemäß einem Ausführungsbeispiels der Erfindung.

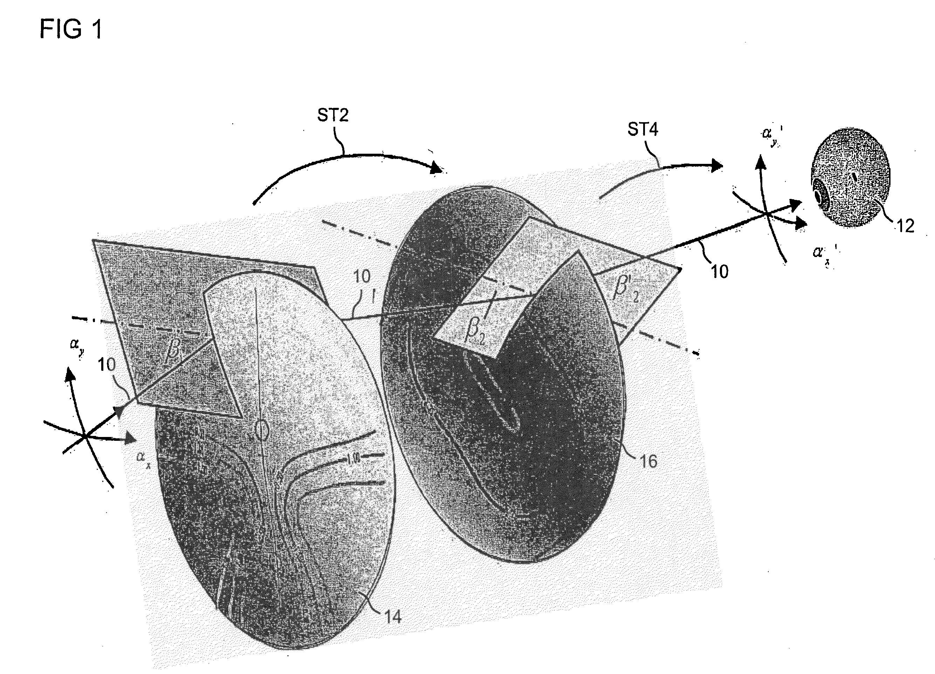

Fig. 1 zeigt eine schematische Darstellung des physiologischen und physikalischen Modells eines Brillenglases in einer vorgegebenen Gebrauchsstellung zusammen mit einem beispielhaften Strahlverlauf, welches einer individuellen Brillenglasberechnung bzw. -optimierung gemäß einer bevorzugten Ausführungsform der Erfindung zugrunde liegt.

Hierbei wird pro Durchblickspunkt des Brillenglases vorzugsweise nur ein einziger Strahl berechnet (der Hauptstrahl 10), begleitend aber außerdem auch die Ableitungen der Pfeilhöhen der Wellenfront nach den transversalen (zum Hauptstrahl senkrechten) Koordinaten. Diese Ableitungen werden bis zur gewünschten Ordnung berücksichtigt, wobei die zweiten Ableitungen die lokalen Krümmungseigenschaften der Wellenfront beschreiben und die höheren Ableitungen mit den Abbildungsfehlern höherer Ordnungen zusammenhängen.

Bei der Durchrechung von Licht durch das Brillenglas werden die lokalen Ableitungen der Wellenfronten im Endeffekt an einer geeigneten Position im Strahlverlauf ermittelt, um sie dort mit den erforderlichen Werten der Refraktion des Brillenträgers zu vergleichen. In einer bevorzugten Ausführungsform ist diese Position beispielsweise die Scheitelpunktkugel oder die Eintrittspupille des Auges 12. Hierzu wird angenommen, dass eine sphärische Wellenfront vom Objektpunkt ausgeht und bis zur ersten Brillenglasfläche 14 propagiert. Dort wird sie gebrochen und anschließend propagiert sie (ST2) bis zur zweiten Brillenglasfläche 16, wo sie wieder gebrochen wird. Sollten weitere Flächen vorhanden sein, die berücksichtigt werden sollen, wird der Wechsel von Propagation und Brechung solange vorgesetzt, bis die letzte Grenzfläche passiert ist, und die letzte Propagation (ST4) findet dann von dieser letzten Grenzfläche bis zur Scheitelpunktkugel (oder der Eintrittspupille des Auges) statt.

Im Folgenden soll nun die Propagation der Wellenfront gemäß einer bevorzugten Ausführungsform der vorliegenden Erfindung näher erläutert werden. Diese Ausführungen sind dabei beispielsweise auf die Propagation der Wellenfront zwischen den beiden Brillenglasflächen und/oder auf die Propagation der Wellenfront von der hinter Brillenglasfläche bis zur Scheitelpunktkugel anwendbar.

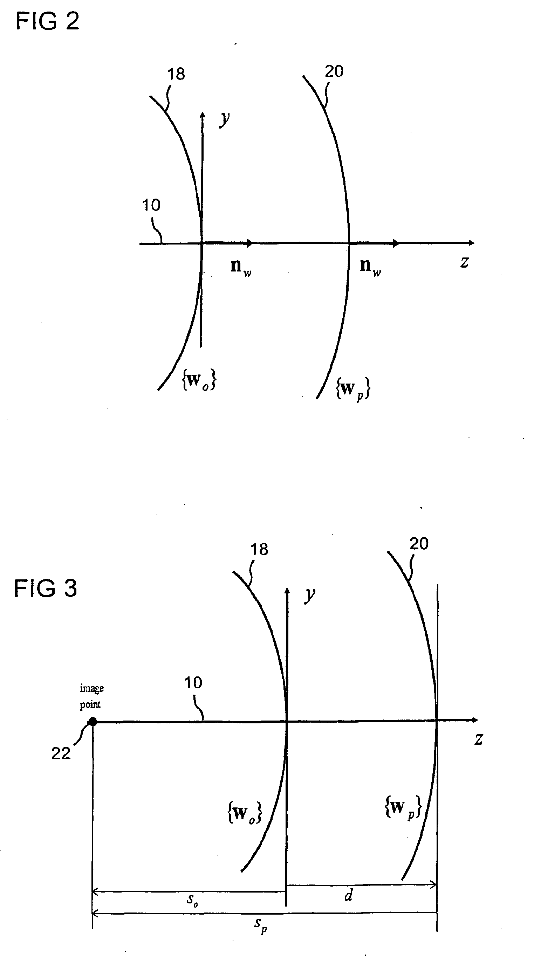

Wie in Fig. 2 dargestellt, wird vorzugsweise ein kartesisches Koordinatensystem (mit einer x-Achse, einer y-Achse und einer z-Achse) definiert, dessen Ursprung bei einem vorgegebenen Hauptstrahl 10 am Schnittpunkt des Hauptstrahls 10 mit der ursprünglichen Wellenfront 18 liegt. Die z-Achse zeigt vorzugsweise in Richtung der des Hauptstrahls 10. Die Richtungen der x-Achse und der y-Achse werden dabei vorzugsweise derart senkrecht zur z-Achse und senkrecht zueinander gewählt, dass das Koordinatensystem rechtshändig ist. Falls bei der ursprünglichen Wellenfront von der Wellenfront an einer brechenden Fläche, also einer Oberfläche des Brillenglases, ausgegangen wird, wird die x-Achse und/oder die y-Achse vorzugsweise parallel zur Fläche bzw. Flächentangente im Durchstoßpunkt des Hauptstrahls gewählt. In einer anderen bevorzugten Ausführungsform werden die x-Achse und die y-Achse parallel zu den Hauptkrümmungen der ursprünglichen Wellenfront 18 gewählt.

Vorzugsweise wird von einer Beschreibung der Wellenfront gemäß

$$\mathbf{w}(x, y) = \left(x, y, w(x, y)\right) \qquad\qquad (1)$$

ausgegangen, wobei der Wert $w(x,y)$ durch

$$w(x, y) = \sum_{k=0}^{\infty} \sum_{m=0}^{k} \frac{a_{m,k-m}}{m!(k-m)!} x^m y^{k-m} \qquad\qquad (2)$$

mittels der Koeffizienten

$$a_{m,k-m} = \frac{\partial^k}{\partial x^m \partial y^{k-m}} w(x,y) \Big|_{x=0,y=0} \tag{3}$$

dargestellt wird.

Damit lässt sich der Zusammenhang zwischen den Koeffizienten $a_{k_x,k_y}$ und den lokalen Aberrationen $E_{k_x,k_y}$ beschreiben durch:

$$E_{k_x,k_y} = na_{k_x,k_y}, \ E_{2,0} = S_{xx} = na_{\text{ln},2,0} \ E_{1,1} = S_{xy} = na_{1,1} \ E_{0,2} = S_{yy} = na_{0,2} \ E_{3,0} = na_{3,0}$$

Für Abbildungsfehler bis zur zweiten Ordnung lässt sich die Propagation einer sphärischen Wellenfront mit der Vergenz $S_o = n/s_o$ der ursprünglichen Wellenfront in einer Umgebung um einen Hauptstrahl vorzugsweise in bekannter Weise durch die Propagationsgleichung

$$S_p = \frac{1}{1 - \frac{d}{n} S_o} S_o \tag{4}$$

ausdrücken, wobei $S_p = n/s_p$ die Vergenz der propagierten Wellenfront bezeichnet. Wie in Fig. 3 veranschaulicht, bezeichnen dabei $s_o$ und $s_p$ den Scheitelpunktabstand der ursprünglichen Wellenfront 18 bzw. der propagierten Wellenfront 20 (Abstand entlang des Hauptstrahls 10 von der Wellenfront zum Bildpunkt 22). $n$ bezeichnet den Brechungsindex und $d$ die Propagationsdistanz.

Durch eine Erweiterung auf drei Dimensionen lässt sich die sphäro-zylindrische Form der Wellenfront wie folgt darstellen. Zunächst werden die Krümmungen $1/s_o$ und $1/s_p$ mit den zweiten Ableitungen der Pfeilhöhen der ursprünglichen Wellenfront 18 bzw. der propagierten Wellenfront 20 identifiziert. In der dreidimensionalen Darstellung werden die zweiten Ableitungen $w_o^{(2,0)} = \partial^2 w_o / \partial x^2$, $w_o^{(1,1)} = \partial^2 w_o / \partial x \partial y$ und $w_o^{(0,2)} = \partial^2 w_o / \partial y^2$ für die ursprüngliche Wellenfront 18 und entsprechend für die propagierte Wellenfront 20 jeweils in Form einer Vergenzmatrix zusammengefasst:

$$S_o = \begin{pmatrix} S_{oxx} & S_{oxy} \\ S_{oxy} & S_{oyy} \end{pmatrix} = n \begin{pmatrix} w_o^{(2,0)} & w_o^{(1,1)} \\ w_o^{(1,1)} & w_o^{(0,2)} \end{pmatrix}, \qquad S_p = \begin{pmatrix} S_{pxx} & S_{pxy} \\ S_{pxy} & S_{pyy} \end{pmatrix} = n \begin{pmatrix} w_p^{(2,0)} & w_p^{(1,1)} \\ w_p^{(1,1)} & w_p^{(0,2)} \end{pmatrix} \tag{5}$$

Die Komponenten der jeweiligen Vergenzmatrix hängen dabei gemäß

$$S_{oxx} = \left(Sph + \frac{Cyl}{2}\right) - \frac{Cyl}{2}\cos 2\alpha$$

$$S_{oxy} = -\frac{Cyl}{2}\sin 2\alpha \qquad\qquad (6)$$

$$S_{oyy} = \left(Sph + \frac{Cyl}{2}\right) + \frac{Cyl}{2}\cos 2\alpha$$

(und analog für die propagierte Wellenfront) mit den bekannten Größen der sphärischen Wirkung $S_{ph}$, dem Betrag $C_{yl}$ der zylinderischen Wirkung und der Achslage $\alpha$ der zylindrischen Wirkung zusammen. Mittels der Darstellung in Form der Vergenzmatrix lässt sich analog zu Gleichung (4) die Propagation einer astigmatischen Wellenfront über die verallgemeinerte Propagationsgleichung

$$\mathbf{S}_p = \frac{1}{1-\frac{d}{n}\mathbf{S}_o}\mathbf{S}_o \qquad\qquad (7)$$

mit der Einheitsmatrix $\mathbf{1} = \begin{pmatrix} 1 & 0 \\ 0 & 1 \end{pmatrix}$ darstellen. Äquivalent zu dieser Darstellung in Form der Vergenzmatrix werden im dreidimensionalen Verktorraum für die ursprüngliche Wellenfront 18 und die propagierte Wellenfront 20 als Powervektoren eingeführt:

$$\mathbf{s}_o = \begin{pmatrix} S_{oxx} \\ S_{oxy} \\ S_{oyy} \end{pmatrix} = n\begin{pmatrix} w_o^{(2,0)} \\ w_o^{(1,1)} \\ w_o^{(0,2)} \end{pmatrix}, \qquad \mathbf{s}_p = \begin{pmatrix} S_{pxx} \\ S_{pxy} \\ S_{pyy} \end{pmatrix} = n\begin{pmatrix} w_p^{(2,0)} \\ w_p^{(1,1)} \\ w_p^{(0,2)} \end{pmatrix} \qquad (8)$$

Für die Berücksichtigung von Abbildungsfehlern höherer Ordnung bei der Propagation der Wellenfront werden nun entsprechende Vektoren $\mathbf{e}_k$ der Dimension $k + 1$ eingeführt:

$$\mathbf{e}_{ok} = \begin{pmatrix} E_{ox...xx} \\ E_{ox...xy} \\ \vdots \\ E_{oy...yy} \end{pmatrix} := n\begin{pmatrix} w_o^{(k,0)} \\ w_o^{(k-1,1)} \\ \vdots \\ w_o^{(0,k)} \end{pmatrix}, \quad \mathbf{e}_{pk} = \begin{pmatrix} E_{px...xx} \\ E_{px...xy} \\ \vdots \\ E_{py...yy} \end{pmatrix} := n\begin{pmatrix} w_p^{(k,0)} \\ w_p^{(k-1,1)} \\ \vdots \\ w_p^{(0,k)} \end{pmatrix} \qquad (9)$$

Für die weitere Betrachtung wird vereinfachend zunächst nur eine zweidimensionale Darstellung erläutert. Dabei wird irgendein Punkt auf der ursprünglichen Wellenfront ($r = o$) bzw. der propagierten Wellenfront ($r = p$) durch

$$\mathbf{w}_r(y) = \begin{pmatrix} y \\ w_r(y) \end{pmatrix} \qquad (10)$$

beschrieben, wobei $w_r(y)$ beschrieben wird durch:

$$w_r(y) = \sum_{k=0}^{\infty} \frac{a_{r,k}}{k!} y^k \qquad (11)$$

Die Koeffizienten $a_{o,k}$ der ursprünglichen Wellenfront 18 entsprechend dabei den Ableitungen der Wellenfront bei $y = 0$:

$$a_{o,k} = \frac{\partial^k}{\partial y^k} w_o(y)\Bigg|_{y=0} = w_o^{(k)}(0) \qquad (12)$$

In zwei Dimensionen reduziert sich die Vergenzmatrix $S_o$ in Gleichung (5) auf einen Skalar $E_{o,k} = n w_o^{(k)} = n a_{o,k}$. Für Abbildungsfehler zweiter und dritter Ordnung ergeben sich damit z.B. $S_o = E_{o,2} = n w_o^{(2)} = n a_{o,2}$, $E_{o,3} = n w_o^{(3)} = n a_{o,3}$, usw.. Entsprechendes gilt für die propagierte Wellenfront 20.

Dabei ist zu bemerken, dass jede Wellenfront am Schnittpunkt mit dem Hauptstrahl 10 gegenüber der z-Achse nicht geneigt ist. Da die z-Achse entlang der Richtung des Hauptstrahls 10 zeigt, steht sie in den Schnittpunkten des Hauptstrahls 10 mit den Wellenfronten 18, 20 senkrecht auf der ursprünglichen und der propagierten Wellenfront. Nachdem außerdem der Ursprung des Koordinatensystems an der ursprünglichen Wellenfront 18 liegt, gilt für die Koeffizienten: $a_{o,0} = 0$, $a_{o,1} = 0$, $a_{p,0} = d$ und $a_{p,1} = 0$

In zwei Dimensionen ergibt sich der Normalenvektor $\mathbf{n}_w(y)$ für eine Wellenfront $w(y)$ durch $\mathbf{n}_w(y) = (-w^{(1)}(y), 1)^T / \sqrt{1 + w^{(1)}(y)^2}$, wobei $w^{(1)} = \partial w / \partial y$. Zur vereinfachten Schreibweise wird zunächst $v \equiv w^{(1)}$ gesetzt und folgende Funktion eingeführt:

$$\mathbf{n}(v) := \frac{1}{\sqrt{1 + v^2}} \begin{pmatrix} -v \\ 1 \end{pmatrix} \qquad (13)$$

Als Ableitungen $\mathbf{n}^{(i)}(0) \equiv \partial^i / \partial v^i \, \mathbf{n}(v)|_{v=0}$ dieser Funktion ergeben sich:

$$\mathbf{n}(0) := \begin{pmatrix} 0 \\ 1 \end{pmatrix}, \; \mathbf{n}^{(1)}(0) := \begin{pmatrix} -1 \\ 0 \end{pmatrix}, \; \mathbf{n}^{(2)}(0) := \begin{pmatrix} 0 \\ -1 \end{pmatrix}, \; \mathbf{n}^{(3)}(0) := \begin{pmatrix} 3 \\ 0 \end{pmatrix}, \; \mathbf{n}^{(4)}(0) := \begin{pmatrix} 0 \\ 9 \end{pmatrix}, \; \text{usw.} \qquad (14)$$

Der sowohl auf der ursprünglichen Wellenfront 18 als auch auf der propagierten Wellenfront 20 senkrecht stehende Normalenvektor lässt sich damit einheitlich mit $\mathbf{n}_w$ bezeichnen. Für die erste Ableitung des Normalenvektors wird somit ermittelt:

$$\left.\frac{\partial}{\partial y}\mathbf{n}_w(y)\right|_{y=0} \equiv \mathbf{n}_w^{(1)}(0) = \mathbf{n}^{(1)}(0)w_o^{(2)}(0) = \begin{pmatrix} -1 \\ 0 \end{pmatrix}w_o^{(2)}(0) \qquad (15)$$

Analoges gilt für die höheren Ableitungen.

Mit den lokalen Aberrationen der ursprünglichen Wellenfront 18 sind auch direkt die entsprechenden Koeffizienten $a_k$ und dazu äquivalent die Ableitungen der Wellenfront festgelegt. Daraus wird anschließend die propagierte Wellenfront 20 ermittelt, indem insbesondere deren Ableitungen bzw. deren Koeffizienten $a_k$ für alle Ordnungen $2 \leq k \leq k_0$ bis zum gewünschten Wert $k_0$ bestimmt werden und damit die Werte der lokalen Aberrationen der propagierten Wellenfront 20 ermittelt werden.

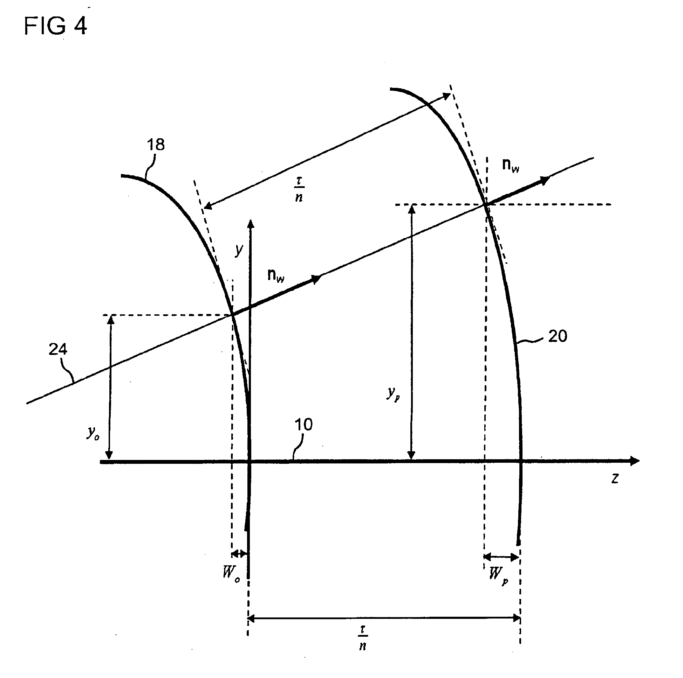

Als Ausgangspunkt wird folgende Situation mit Bezug auf Fig. 4 veranschaulichend betrachtet. Während der Hauptstrahl 10 und das Koordinatensystem fest stehen, tastet ein benachbarter Strahl 24 die ursprüngliche Wellenfront 18 ($\{\mathbf{w}_o\}$) ab und trifft sie in einem Abschnitt $y_o \neq 0$. Von dort propagiert er weiter zur propagierten Wellenfront 20 ($\{\mathbf{w}_p\}$). Wie in Fig. 4 dargestellt, wird als $y_o$ die Projektion des Schnittpunktes des Nachbarstrahls 24 mit der ursprünglichen Wellenfront $\{\mathbf{w}_o\}$ auf die y-Achse bezeichnet, während analog die Projektion des Schnittpunktes mit der propagierten Wellenfront $\{\mathbf{w}_p\}$ auf die y-Achse mit $y_p$ bezeichnet wird.

Der Vektor $\mathbf{w}_o = \mathbf{w}_o(y_o)$ (siehe Gleichung (10)) zeigt auf den Schnittpunkt des Nachbarstrahls 24 mit der ursprünglichen Wellenfront 18 und der optische Gangunterschied (OPD, optical path difference) bezüglich der propagierten Wellenfront 20 wird mit $\tau$ bezeichnet. Dementsprechend wird der Vektor von der ursprünglichen Wellenfront 18 zur propagierten Fläche 20 durch $\tau/n\mathbf{n}_w$ dargestellt. Damit ergibt sich für den Vektor zum entsprechenden Punkt der propagierten Wellenfront: $\mathbf{w}_p = \mathbf{w}_o + \tau/n\mathbf{n}_w$. Als grundlegende Gleichung wird somit eingeführt:

$$\begin{pmatrix} y_o \\ w_o(y_o) \end{pmatrix} + \frac{\tau}{n}\mathbf{n}_w = \begin{pmatrix} y_p \\ w_p(y_p) \end{pmatrix} \qquad (16)$$

Aus dieser Gleichung werden nun die gewünschten Relationen Ordnung für Ordnung hergeleitet. Dabei wird vorzugsweise $y_p$ als freie Variable genutzt, von der wiederum $y_o$ abhängt. Für die Lösung der Gleichung kann zunächst der Vektor

$$\mathbf{p}(y_p) = \begin{pmatrix} y_o(y_p) \\ w_p(y_p) \end{pmatrix} \qquad (17)$$

unter der Randbedingung $\mathbf{p}(0) = \begin{pmatrix} 0 \\ \tau/n \end{pmatrix}$ eingeführt werden. Für die weitere Betrachtung wird ausgehend hiervon folgende Funktion eingeführt:

$$\mathbf{f}(\mathbf{p}, y_p) = \begin{pmatrix} y_o + \frac{\tau}{n}n_{w,y}(w_o^{(1)}(y_o)) - y_p \\ w_o(y_o) + \frac{\tau}{n}n_{w,z}(w_o^{(1)}(y_o)) - w_p \end{pmatrix} \qquad (18)$$

wobei $(p_1, p_2) = (y_o, w_p)$ die Komponenten von p sind. Setzt man nun $\mathbf{p} = \mathbf{p}(y_p)$, kann die Gleichung (16) in kompakterer Weise dargestellt werden durch:

$$f\left(\mathbf{p}(y_\mathrm{p}), y_\mathrm{p}\right) = 0 \qquad (19)$$

Die Ableitungen dieser Funktion nach $y_\mathrm{p}$ werden vorzugsweise durch folgendes System von Differenzialgleichungen ausgedrückt:

$$\sum_{j=1}^{2} \frac{\partial f_i}{\partial p_j} p_j^{(1)}(y_\mathrm{p}) + \frac{\partial f_i}{\partial y_\mathrm{p}} = 0, \quad i = 1,2 \qquad (20)$$

wobei die Matrix mit den Elementen $A_{ij} := \partial f_i / \partial p_j$ als Jacobi-Matrix A bezeichnet wird. Die Jacobi-Matrix A lautet damit

$$\mathbf{A} := \begin{pmatrix} \dfrac{\partial f_1}{\partial y_\mathrm{o}} & \dfrac{\partial f_1}{\partial w_\mathrm{p}} \\ \dfrac{\partial f_2}{\partial y_\mathrm{o}} & \dfrac{\partial f_2}{\partial w_\mathrm{p}} \end{pmatrix} = \begin{pmatrix} 1 + \dfrac{\tau}{n} n_{w,y}^{(1)} w_\mathrm{o}^{(2)} & 0 \\ w_\mathrm{o}^{(1)} + \dfrac{\tau}{n} n_{w,z}^{(1)} w_\mathrm{o}^{(2)} & -1 \end{pmatrix} \qquad (21)$$

Die in dieser Gleichung auftretenden Ausdrücke sind zu verstehen als $w_\mathrm{o}^{(1)} \equiv w_\mathrm{o}^{(1)}(y_\mathrm{o})$, $w_\mathrm{o}^{(2)} \equiv w_\mathrm{o}^{(2)}(y_\mathrm{o})$, $n_{w,y} \equiv n_{w,y}(w_\mathrm{o}^{(1)}(y_\mathrm{o}))$, $n_{w,y}^{(1)} \equiv n_{w,y}^{(1)}(w_\mathrm{o}^{(1)}(y_\mathrm{o}))$, usw., wobei $y_\mathrm{o}$, $w_\mathrm{p}$ wiederum selbst Funktionen von $y_\mathrm{p}$ sind.

Der Ableitungsvektor $\partial f / \partial y_\mathrm{p}$ lässt sich zusammenfassen als

$$\mathbf{b} := -\frac{\partial \mathbf{f}}{\partial y_\mathrm{p}} = \begin{pmatrix} 1 \\ 0 \end{pmatrix} \qquad (22)$$

Damit kann das obige Differenzialgleichungssystem dargestellt werden durch:

$$\mathbf{A}(\mathbf{p}(y_\mathrm{p}))\mathbf{p}^{(1)}(y_\mathrm{p}) = \mathbf{b} \qquad (23)$$

Formell wird diese Gleichung gelöst durch:

$$\mathbf{p}^{(1)}(y_\mathrm{p}) = \mathbf{A}(\mathbf{p}(y_\mathrm{p}))^{-1}\mathbf{b} \qquad (24)$$

mit der Randbedingung $\mathbf{p}(0) = \begin{pmatrix} 0 \\ \tau/n \end{pmatrix}$ . Ausgehend davon wird nun das Gleichungssystem für Abbildungsfehler höherer Ordnung vorzugsweise wie folgt rekursiv gelöst:

$$\mathbf{p}^{(1)}(0) = \mathbf{A}^{-1}\mathbf{b}$$
$$\mathbf{p}^{(2)}(0) = \left(\mathbf{A}^{-1}\right)^{(1)}\mathbf{b}$$
$$\ldots$$
$$\mathbf{p}^{(k)}(0) = \left(\mathbf{A}^{-1}\right)^{(k-1)}\mathbf{b},$$

(25)

wobei abkürzend $\mathbf{A}^{-1} = \mathbf{A}(p(0))^{-1} = \mathbf{A}(0)^{-1}$, $\left(\mathbf{A}^{-1}\right)^{(1)} = \dfrac{d}{dy_p}\mathbf{A}\big(\mathbf{p}(y_p)\big)^{-1}\Big|_{y_p=0}$, ...,

$\left(\mathbf{A}^{-1}\right)^{(k-1)} = \dfrac{d^{k-1}}{dy_p^{k-1}}\mathbf{A}\big(\mathbf{p}(y_p)\big)^{-1}\Big|_{y_p=0}$ bezeichnet.

In einem alternativen Ansatz wird nun vorgeschlagen, die Rekursion ausgehend von Gleichung (23) anstelle von Gleichung (24) vorzunehmen. Die ersten ($k$-1) Ableitungen von Gleichung (23) ergeben:

$$\mathbf{A}\mathbf{p}^{(1)}(0) = \mathbf{b} \qquad (a)$$
$$\mathbf{A}^{(1)}\mathbf{p}^{(1)}(0) + \mathbf{A}\mathbf{p}^{(2)}(0) = \mathbf{0} \qquad (b)$$
$$\mathbf{A}^{(2)}\mathbf{p}^{(1)}(0) + 2\mathbf{A}^{(1)}\mathbf{p}^{(2)}(0) + \mathbf{A}\mathbf{p}^{(3)}(0) = \mathbf{0} \qquad (c)$$

(26)

$$\ldots$$
$$\sum_{j=1}^{k}\binom{k-1}{j-1}\mathbf{A}^{(k-j)}\mathbf{p}^{(j)}(0) = \mathbf{0}, \quad k \geq 2 \qquad (d)$$

wobei $\mathbf{A} = \mathbf{A}(p(0)) = \mathbf{A}(0)$, $\mathbf{A}^{(1)} = \dfrac{d}{dy_p}\mathbf{A}(\mathbf{p}(y_p))\Big|_{y_p=0}$, ..., $\mathbf{A}^{(k-j)} = \dfrac{d^{k-j}}{dy_p^{k-j}}\mathbf{A}(\mathbf{p}(y_p))\Big|_{y_p=0}$ die totalen Ableitungen der Funktion bezeichnen. Formell werden diese Gleichungen gelöst durch:

$$\mathbf{p}^{(1)}(0) = \mathbf{A}^{-1}\mathbf{b} \qquad\qquad , \quad k = 1$$
$$\mathbf{p}^{(k)}(0) = -\mathbf{A}^{-1}\sum_{j=1}^{k-1}\binom{k-1}{j-1}\mathbf{A}^{(k-j)}\mathbf{p}^{(j)}(0), \quad k \geq 2.$$

(27)

Um $\mathbf{A}(0)^{-1}$ zu erhalten, wird vorzugsweise Gleichung (21) für $\mathbf{p} = 0$ ausgewertet und Gleichung (14) angewandt. Dies führt zu:

$$\mathbf{A}(\mathbf{0}) = \begin{pmatrix} 1 + \dfrac{\tau}{n}w_o^{(2)} & 0 \\ 0 & -1 \end{pmatrix} \Rightarrow \mathbf{A}(\mathbf{0})^{-1} = \begin{pmatrix} \dfrac{1}{1 - \tfrac{\tau}{n}w_o^{(2)}} & 0 \\ 0 & -1 \end{pmatrix}$$

(28)

woraus sich für $\mathbf{p}^{(1)}(0)$ ergibt:

$$\mathbf{p}^{(1)}(0) = \mathbf{A}^{-1}\mathbf{b} = \begin{pmatrix} \dfrac{1}{1 - \tau/_n w_o^{(2)}} \\ 0 \end{pmatrix} \qquad (29)$$

Dies wiederum bedeutet $y_o^{(1)}(0) = \dfrac{1}{1 - \tau/_n w_o^{(2)}}$ und $w_p^{(1)}(0) = 0$. Für Ordnungen $k \geq 2$ wird vorzugsweise

Gleichung (27) angewandt. Die Ableitungen $\mathbf{A}^{(1)} = \dfrac{d}{dy_p} \mathbf{A}(\mathbf{p}(y_p))\Big|_{y_p=0}$, usw. werden vorzugsweise aus Gleichung (21) ermittelt und es wird vorzugsweise wiederum Gleichung (14) angewandt. Damit ergibt sich in der zweiten Ordnung:

$$w_p^{(2)} = \dfrac{1}{1 - \tau/_n w_o^{(2)}} w_o^{(2)} \qquad (30)$$

was im Grund der bereits oben angeführten Propagationsgleichung entspricht. Die höheren Ordnungen lassen sich in analoger Weise ausdrücken durch:

$$w_p^{(3)} = \left( \dfrac{1}{1 - \tau/_n w_o^{(2)}} \right)^3 w_o^{(3)}$$

$$w_p^{(4)} = \left( \dfrac{1}{1 - \tau/_n w_o^{(2)}} \right)^4 \left( w_o^{(4)} + 3\dfrac{\tau}{n}\left( \dfrac{1}{1 - \tau/_n w_o^{(2)}} w_o^{(3)2} - w_o^{(2)4} \right) \right) \qquad (31)$$

$$w_p^{(5)} = \left( \dfrac{1}{1 - \tau/_n w_o^{(2)}} \right)^5 \left( w_o^{(5)} + 5\dfrac{1}{1 - \tau/_n w_o^{(2)}}\dfrac{\tau}{n}w_o^{(3)}\left( 2w_o^{(4)} + 3\dfrac{1}{1 - \tau/_n w_o^{(2)}}\dfrac{\tau}{n}w_o^{(3)2} - 6w_o^{(2)3} \right) \right)$$

Gleichung (31) gilt entsprechend für die Ableitungen und die Koeffizienten $a_{o,k}$ und $a_{p,k}$ aufgrund der Gleichungen (10) bis (12). Ersetzt man nun $d = \tau/n$ und $\beta = \dfrac{1}{1 - \frac{d}{n}S_o}$, lassen sich die lokalen Aberrationen folgendermaßen

ausdrücken:

$$S_p = \beta S_o$$

$$E_{p,3} = \beta^3 E_{o,3}$$

$$E_{p,4} = \beta^4 \left( E_{o,4} + 3\tfrac{d}{n}\left( \beta E_{o,3}^2 - \frac{S_o^4}{n^2} \right) \right)$$

$$E_{p,5} = \beta^5 \left( E_{o,5} + 5\beta\tfrac{d}{n} E_{o,3} \left( 2E_{o,4} + 3\beta\tfrac{d}{n} E_{o,3}^2 - 6\frac{S_o^3}{n^2} \right) \right) \tag{32}$$

$$E_{p,6} = \beta^6 \left( E_{o,6} + 5\beta\tfrac{d}{n}\left( 3E_{o,3}E_{o,5} + 21\beta\tfrac{d}{n} E_{o,3}^2 E_{o,4} - 12\frac{S_o^3 E_{o,4}}{n^2} \right. \right.$$

$$\left. \left. + 2E_{o,4}^2 - 9\beta S_0^2 E_{o,3}^2 \frac{3+4\tfrac{d}{n}S_o}{n^2} + 21(\beta\tfrac{d}{n})^2 E_{o,3}^4 + 9S_o^6 \frac{1+\tfrac{d}{n}S_o}{n^4} \right) \right)$$

Verallgemeinert wird dies für $2<k\leq6$ vorzugsweise durch

$$E_{p,k} = \beta^k (E_{o,k} + R_k) \tag{33}$$

dargestellt, wobei in $R_k$ alle Wellenfrontableitungen $E_{o,j}$ der niedrigeren Ordnungen (j < k) in Form von lokalen Aberrationen ausgedrückt werden.

Auch wenn eine dreidimensionale Darstellung aufwändiger ist, kann sie im Prinzip analog zur zweidimensionalen Darstellung nachvollzogen werden. Deshalb werden für die vollständig dreidimensionale Darstellung im Folgenden nur einige wesentliche Zwischenbetrachtungen ausgeführt.

Vorzugsweise lässt sich die ursprüngliche Wellenfront durch den 3D-Vektor

$$\mathbf{w}_o(x,y) = \begin{pmatrix} x \\ y \\ w_\mathbf{o}(x,y) \end{pmatrix} \tag{34}$$

ausdrücken, wobei $w_o(x,y)$ entsprechend der Gleichung (2) gegebenen ist und die Beziehung zwischen den Koeffizienten und den Ableitungen entsprechend der Gleichung (3) gegeben ist. Der Zusammenhang zwischen den Koeffizienten und den lokalen Aberrationen ergibt sich durch Multiplikation der Koeffizienten mit dem Brechungsindex. Vorzugsweise werden analog zu Gleichung (13) Normalenvektoren eingeführt:

$$\mathbf{n}(u,v) := \frac{1}{\sqrt{1+u^2+v^2}} \begin{pmatrix} -u \\ -v \\ 1 \end{pmatrix} \tag{35}$$

so dass die Normalenvektoren zu einer Oberfläche $\mathbf{w}(x,y):= (x, y, w(x, y))^T$ gegeben sind durch:

$$\frac{\mathbf{w}^{(1,0)} \times \mathbf{w}^{(0,1)}}{\left|\mathbf{w}^{(1,0)} \times \mathbf{w}^{(0,1)}\right|} = \frac{1}{\sqrt{1 + w^{(1,0)^2} + w^{(0,1)^2}}} \begin{pmatrix} -w^{(1,0)} \\ -w^{(0,1)} \\ 1 \end{pmatrix} = \mathbf{n}\left(w^{(1,0)}, w^{(0,1)}\right) = \mathbf{n}(\nabla w)$$

Im Schnittpunkt ergibt sich somit $\mathbf{n}_w(0,0) = (0,0,1)^T$ und die Ableitungen entsprechend der Gleichung (14) werden vorzugsweise aus der Gleichung (35) ermittelt.

Als Ausgangspunkt für die Betrachtung eines Zusammenhangs zwischen der ursprünglichen und der propagierten Wellenfront wird vorzugsweise im Wesentlichen auf Gleichung (16) zurückgegriffen, mit dem Unterschied, dass nunmehr x- und y-Komponenten gleichzeitig betrachtet werden. Als Vektor unbekannter Funktionen wird vorzugsweise vorgegeben:

$$\mathbf{p}(x_p, y_p) = \begin{pmatrix} x_o(x_p, y_p) \\ y_o(x_p, y_p) \\ w_p(x_p, y_p) \end{pmatrix} \tag{36}$$

und analog zu Gleichung (16) wird für die dreidimensionale Betrachtung vorzugsweise angesetzt:

$$\mathbf{f}\big(\mathbf{p}(x_p, y_p), x_p, y_p\big) = \mathbf{0} \tag{37}$$

wobei f analog zu Gleichung (18) ist.

Ein wichtiger Unterschied zur zweidimensionalen Betrachtung ist, dass im dreidimensionalen Fall zwei Argumente existieren, bezüglich derer die Ableitungen berücksichtigt werden. Es werden somit insbesondere bereits in erster Ordnung zwei Gleichungen betrachtet:

$$\begin{aligned} \mathbf{A}\big(\mathbf{p}(x_p, y_p)\big)\mathbf{p}^{(1,0)}(x_p, y_p) &= \mathbf{b}_x \\ \mathbf{A}\big(\mathbf{p}(x_p, y_p)\big)\mathbf{p}^{(0,1)}(x_p, y_p) &= \mathbf{b}_y \end{aligned} \tag{38}$$

wobei die Inhomogenitäten durch die Spaltenvektoren beschrieben werden:

$$\mathbf{b}_x = -\frac{\partial \mathbf{f}}{\partial x_p} = \begin{pmatrix} 1 & 0 & 0 \end{pmatrix}^T, \quad \mathbf{b}_y = -\frac{\partial \mathbf{f}}{\partial y_p} = \begin{pmatrix} 0 & 1 & 0 \end{pmatrix}^T \tag{39}$$

Die Jacobi-Matrix $\mathbf{A}(\mathbf{p}(x_2, y_2))$ mit den Elementen $A_{ij} := \partial f_i / \partial p_j$ ist für beide Gleichungen dieselbe und analog zu Gleichung (21), aber nun in der Größe 3x3.

$$A\!\left(p(x_p,y_p)\right)=\begin{pmatrix} 1+\dfrac{\tau}{n}(n_{w,x}^{(0,1)}w_o^{(1,1)}+n_{w,x}^{(1,0)}w_o^{(2,0)}) & \dfrac{\tau}{n}(n_{w,x}^{(0,1)}w_o^{(0,2)}+n_{w,x}^{(1,0)}w_o^{(1,1)}) & 0 \\[2mm] \dfrac{\tau}{n}(n_{w,y}^{(0,1)}w_o^{(1,1)}+n_{w,y}^{(1,0)}w_o^{(2,0)}) & 1+\dfrac{\tau}{n}(n_{w,y}^{(0,1)}w_o^{(0,2)}+n_{w,y}^{(1,0)}w_o^{(1,1)}) & 0 \\[2mm] w_o^{(1,0)}+\dfrac{\tau}{n}(n_{w,z}^{(0,1)}w_o^{(1,1)}+n_{w,z}^{(1,0)}w_o^{(2,0)}) & w_o^{(0,1)}+\dfrac{\tau}{n}(n_{w,z}^{(0,1)}w_o^{(0,2)}+n_{w,z}^{(1,0)}w_o^{(1,1)}) & -1 \end{pmatrix} \quad (40)$$

Die direkten Lösungen analog zu Gleichung (25) sind nun gegeben durch

$$\mathbf{p}^{(1,0)}(0,0)=\mathbf{A}^{-1}\mathbf{b}_x$$
$$\mathbf{p}^{(0,1)}(0,0)=\mathbf{A}^{-1}\mathbf{b}_y$$
$$\mathbf{p}^{(2,0)}(0,0)=\left(\mathbf{A}^{-1}\right)^{(1,0)}\!\Big|\mathbf{b}_x$$
$$\mathbf{p}^{(1,1)}(0,0)=\left(\mathbf{A}^{-1}\right)^{(0,1)}\mathbf{b}_x=\left(\mathbf{A}^{-1}\right)^{(1,0)}\!\Big|\mathbf{b}_y \qquad (41)$$
$$\mathbf{p}^{(0,2)}(0,0)=\left(\mathbf{A}^{-1}\right)^{(0,1)}\mathbf{b}_y$$
$$\dots$$
$$\mathbf{p}^{(k_x,k_y)}(0,0)=\begin{cases}\left(\mathbf{A}^{-1}\right)^{(k_x-1,0)}\mathbf{b}_x & , \ k_x\neq0,k_y=0 \\ \left(\mathbf{A}^{-1}\right)^{(k_x-1,k_y)}\mathbf{b}_x=\left(\mathbf{A}^{-1}\right)^{(k_x,k_y-1)}\mathbf{b}_y & , \ k_x\neq0,k_y\neq0 \\ \left(\mathbf{A}^{-1}\right)^{(0,k_y-1)}\mathbf{b}_y & , \ k_x=0,k_y\neq0 \end{cases}$$

wobei $\mathbf{A}^{-1}=\mathbf{A}(p(0,0))^{-1}=\mathbf{A}(0)^{-1}$, $\left(\mathbf{A}^{-1}\right)^{(1,0)}=\dfrac{d}{dx_p}\mathbf{A}\!\left(p(x_p,y_p)\right)^{-1}\Big|_{x_p=0,y_p=0}$ ,

$$\left(\mathbf{A}^{-1}\right)^{(k_x,k_y)}=\dfrac{d^{k_x}}{dx_p^{k_x}}\dfrac{d^{k_y}}{dx_p^{k_y}}\mathbf{A}\!\left(p(x_p,y_p)\right)^{-1}\Big|_{x_p=0,y_p=0} \quad\text{, usw..}$$

Analog zu den Gleichungen (28) und (29) ergibt sich bei der dreidimensionalen Betrachtung:

$$\mathbf{A}(0)=\begin{pmatrix} 1-\frac{\tau}{n}w_o^{(2,0)} & -\frac{\tau}{n}w_o^{(1,1)} & 0 \\ -\frac{\tau}{n}w_o^{(1,1)} & 1-\frac{\tau}{n}w_o^{(0,2)} & 0 \\ 0 & 0 & -1 \end{pmatrix}\Rightarrow \mathbf{A}(0)^{-1}=\begin{pmatrix} \gamma\!\begin{pmatrix}1-\frac{\tau}{n}w_o^{(0,2)} & \frac{\tau}{n}w_o^{(1,1)} \\ \frac{\tau}{n}w_o^{(1,1)} & 1-\frac{\tau}{n}w_o^{(2,0)}\end{pmatrix} & 0 \\ 0 \quad\quad 0 & -1 \end{pmatrix} \quad (42)$$

mit

$$\gamma=\dfrac{-1}{\det(\mathbf{A}(0))}=\dfrac{1}{1-\frac{\tau}{n}w_o^{(2,0)}-(\frac{\tau}{n}w_o^{(1,1)})^2-\frac{\tau}{n}w_o^{(0,2)}+(\frac{\tau}{n})^2 w_o^{(2,0)}w_o^{(0,2)}}$$

und nach Anwendung der Gleichungen (39) und (41) die Lösungen

$$\mathbf{p}^{(1,0)}(0,0) = \gamma \begin{pmatrix} n(n - \tau w_o^{(0,2)}) \\ n\tau w_o^{(1,1)} \\ 0 \end{pmatrix}, \quad \mathbf{p}^{(0,1)}(0,0) = \gamma \begin{pmatrix} n\tau w_o^{(1,1)} \\ n(n - \tau w_o^{(2,0)}) \\ 0 \end{pmatrix} \qquad (43)$$

Nach weiterer Anwendung der Gleichungen (39) und (41) ergibt sich in zweiter Ordnung

$$w_p^{(2,0)} = \gamma \left( \tfrac{\tau}{n} \left( w_o^{(1,1)} \right)^2 + \left( 1 - \tfrac{\tau}{n} w_o^{(0,2)} \right) w_o^{(2,0)} \right)$$
$$w_p^{(1,1)} = \gamma w_o^{(1,1)} \qquad (44)$$
$$w_p^{(0,2)} = \gamma \left( \tfrac{\tau}{n} \left( w_o^{(1,1)} \right)^2 + \left( 1 - \tfrac{\tau}{n} w_o^{(2,0)} \right) w_o^{(0,2)} \right)$$

In einer bevorzugten Ausführungsform werden die Koordinatenachsen zur Bestimmung der Propagation derart gewählt bzw. bestimmt, dass die x-Achse und die y-Achse mit den Richtungen der Hauptkrümmungen der ursprünglichen Wellenfront zusammenfallen. Dadurch gilt $w_o^{(1,1)} = 0$ , und die Gleichungen (44) vereinfachen sich zu

$$w_p^{(2,0)} = \frac{1}{1 - \tfrac{\tau}{n} w_o^{(2,0)}} w_o^{(2,0)}$$
$$w_p^{(1,1)} = 0 \qquad (45)$$
$$w_p^{(0,2)} = \frac{1}{1 - \tfrac{\tau}{n} w_o^{(0,2)}} w_o^{(0,2)}$$

In entsprechender Weise werden die Gleichungen in dritter Ordnung vorzugsweise folgendermaßen ausgedrückt:

$$w_p^{(3,0)} = \gamma^3 \left( (1 - \tfrac{\tau}{n} w_o^{(0,2)})^3 w_o^{(3,0)} + \tfrac{\tau}{n} w_o^{(1,1)} \right.$$
$$\left. \left( 3(1 - \tfrac{\tau}{n} w_o^{(0,2)})^2 w_o^{(2,1)} + \tfrac{\tau}{n} w_o^{(1,1)} (\tfrac{\tau}{n} w_o^{(0,3)} w_o^{(1,1)}) + 3(1 - \tfrac{\tau}{n} w_o^{(0,2)})^2 w_o^{(1,2)} \right) \right)$$

$$w_p^{(2,1)} = \gamma^3 \left( w_o^{(2,1)} + \tfrac{\tau}{n} \left( w_o^{(1,1)} (2w_o^{(1,2)} + w_o^{(3,0)}) - (2w_o^{(0,2)} + w_o^{(2,0)}) w_o^{(2,1)} \right) + \right.$$
$$(\tfrac{\tau}{n})^2 \left( w_o^{(2,1)} w_o^{(0,2)2} - 2(w_o^{(1,1)} (w_o^{(1,2)} + w_o^{(3,0)}) - w_o^{(2,0)} w_o^{(2,1)}) w_o^{(0,2)} + \right.$$
$$\left. w_o^{(0,3)} w_o^{(1,1)2} + 2w_o^{(1,1)} (w_o^{(1,1)} w_o^{(2,1)} - w_o^{(1,2)} w_o^{(2,0)}) \right) +$$
$$(\tfrac{\tau}{n})^3 \left( w_o^{(1,2)} w_o^{(1,1)3} - (w_o^{(0,3)} w_o^{(2,0)} + 2w_o^{(0,2)} w_o^{(2,1)}) w_o^{(1,1)2} + \right.$$
$$\left. \left. w_o^{(0,2)} (2w_o^{(1,2)} w_o^{(2,0)} + w_o^{(0,2)} w_o^{(3,0)}) w_o^{(1,1)} - w_o^{(0,2)2} w_o^{(2,0)} w_o^{(2,1)} \right) \right)$$

$$w_p^{(1,2)} = \gamma^3 \left( w_o^{(1,2)} + \tfrac{\tau}{n} \left( w_o^{(1,1)} (2w_o^{(2,1)} + w_o^{(0,3)}) - (2w_o^{(2,0)} + w_o^{(0,2)}) w_o^{(1,2)} \right) + \right.$$
$$(\tfrac{\tau}{n})^2 \left( w_o^{(1,2)} w_o^{(2,0)2} - 2(w_o^{(1,1)} (w_o^{(2,1)} + w_o^{(0,3)}) - w_o^{(0,2)} w_o^{(1,2)}) w_o^{(2,0)} + \right.$$
$$\left. w_o^{(3,0)} w_o^{(1,1)2} + 2w_o^{(1,1)} (w_o^{(1,1)} w_o^{(1,2)} - w_o^{(2,1)} w_o^{(0,2)}) \right) +$$
$$(\tfrac{\tau}{n})^3 \left( w_o^{(2,1)} w_o^{(1,1)3} - (w_o^{(3,0)} w_o^{(0,2)} + 2w_o^{(2,0)} w_o^{(1,2)}) w_o^{(1,1)2} + \right.$$
$$\left. \left. w_o^{(2,0)} (2w_o^{(2,1)} w_o^{(0,2)} + w_o^{(2,0)} w_o^{(0,3)}) w_o^{(1,1)} - w_o^{(2,0)2} w_o^{(0,2)} w_o^{(1,2)} \right) \right)$$

$$\text{(46)}$$

$$w_p^{(0,3)} = \gamma^3 \left( (1 - \tfrac{\tau}{n} w_o^{(2,0)})^3 w_o^{(0,3)} + \tfrac{\tau}{n} w_o^{(1,1)} \right.$$
$$\left. \left( 3(1 - \tfrac{\tau}{n} w_o^{(2,0)})^2 w_o^{(1,2)} + \tfrac{\tau}{n} w_o^{(1,1)} (\tfrac{\tau}{n} w_o^{(3,0)} w_o^{(1,1)}) + 3(1 - \tfrac{\tau}{n} w_o^{(2,0)})^2 w_o^{(2,1)} \right) \right)$$

Ersetzt man nun $d = \tau/n$ und $\gamma = \dfrac{1}{1 - \tfrac{d}{n} S_{oxx} - (\tfrac{d}{n} S_{oxy})^2 - \tfrac{d}{n} S_{oyy} + (\tfrac{d}{n})^2 S_{oxx} S_{oyy})}$ , lässt sich die Propagation der Wellenfront in zweiter Ordnung in Form der lokalen Aberrationen folgendermaßen ausdrücken:

$$\mathbf{s}_p = \gamma \left( \mathbf{s}_o + \frac{d}{n} \begin{pmatrix} S_{oxy}^2 - S_{oxx} S_{oyy} \\ 0 \\ S_{oxy}^2 - S_{oxx} S_{oyy} \end{pmatrix} \right) \tag{47}$$

Ersetzt man außerdem $\beta_x = \dfrac{1}{1 - \tfrac{d}{n} S_{xx}}$ und $\beta_y = \dfrac{1}{1 - \tfrac{d}{n} S_{yy}}$ , so kann die Propagation der Wellenfront in dritter Ordnung beschrieben werden durch:

$$\mathbf{e}_{p3} = \gamma^3 \begin{pmatrix} \beta_y^{-3} & 3\beta_y^{-2}\,{}^d\!/_n S_{xy} & 3\beta_y^{-1}({}^d\!/_n S_{xy})^2 & ({}^d\!/_n S_{xy})^3 \\ \beta_y^{-2}\,{}^d\!/_n S_{xy} & \beta_y^{-1}({}^\gamma\!/_\gamma + 3({}^d\!/_n S_{xy})^2) & {}^\gamma\!/_\gamma\,{}^d\!/_n S_{xy} + 3({}^d\!/_n S_{xy})^3 & \beta_x^{-1}({}^d\!/_n S_{xy})^2 \\ \beta_y^{-1}({}^d\!/_n S_{xy})^2 & {}^\gamma\!/_\gamma\,{}^d\!/_n S_{xy} + 3({}^d\!/_n S_{xy})^3 & \beta_x^{-1}({}^\gamma\!/_\gamma + 3({}^d\!/_n S_{xy})^2) & \beta_x^{-2}\,{}^d\!/_n S_{xy} \\ ({}^d\!/_n S_{xy})^3 & 3\beta_x^{-1}({}^d\!/_n S_{xy})^2 & 3\beta_x^{-2}\,{}^d\!/_n S_{xy} & \beta_x^{-3} \end{pmatrix} \mathbf{e}_{o3} \qquad (48)$$

In einer bevorzugten Ausführungsform werden die Koordinatenachsen zur Bestimmung der' Propagation derart gewählt bzw. bestimmt, dass die x-Achse und die y-Achse mit den Richtungen der Hauptkrümmungen der ursprünglichen Wellenfront zusammenfallen. Dadurch vereinfachen sich die Gleichungen (47) und (48) zu

$$\mathbf{s}_p = \begin{pmatrix} \beta_x & 0 & 0 \\ 0 & 0 & 0 \\ 0 & 0 & \beta_y \end{pmatrix} \mathbf{s}_o \qquad (49)$$

$$\mathbf{e}_{p3} = \begin{pmatrix} \beta_x^3 & 0 & 0 & 0 \\ 0 & \beta_x^2\beta_y & 0 & 0 \\ 0 & 0 & \beta_x\beta_y^2 & 0 \\ 0 & 0 & 0 & \beta_y^3 \end{pmatrix} \mathbf{e}_{o3} \qquad (50)$$

Auch die Propagation der Abbildungsfehler vierter Ordnung lässt sich damit vergleichsweise einfach bestimmten durch:

$$\mathbf{e}_{p4} = \begin{pmatrix} \beta_x^4 & \cdots & & \cdots & 0 \\ \vdots & \beta_x^3\beta_y^1 & & & \vdots \\ & & \beta_x^2\beta_y^2 & & \\ \vdots & & & \beta_x^1\beta_y^3 & \vdots \\ 0 & & & \cdots & \beta_y^4 \end{pmatrix}$$

$$\left( \mathbf{e}_{o4} + \frac{d}{n} \begin{pmatrix} 3\left( \beta_x E_{oxxx}^2 + \beta_y E_{oxxy}^2 - \dfrac{S_{oxx}^4}{n^2} \right) \\ 3E_{oxxy}\left( \beta_x E_{oxxx} + \beta_y E_{oxyy} \right) \\ \beta_x(2E_{oxxy}^2 + E_{oxxx}E_{oxyy}) + \beta_y(2E_{oxyy}^2 + E_{oxxy}E_{oyyy}) - \left( \dfrac{S_{oxx}S_{oyy}}{n} \right)^2 \\ 3E_{oxyy}\left( \beta_x E_{oxxy} + \beta_y E_{oyyy} \right) \\ 3\left( \beta_x E_{oxyy}^2 + \beta_y E_{oyyy}^2 - \dfrac{S_{oyy}^4}{n^2} \right) \end{pmatrix} \right) \qquad (51)$$

Verallgemeinert wird dies für 2<$k$≤4 vorzugsweise durch

$$\mathbf{e}_{pk} = \mathbf{B}_k(\mathbf{e}_{ok} + \mathbf{r}_k) \tag{52}$$

mit

$$\mathbf{B}_k = \begin{pmatrix} \beta_x^k & \cdots & & \cdots & 0 \\ \vdots & \beta_x^{k-1}\beta_y^1 & & & \vdots \\ & & \ddots & & \\ \vdots & & & \beta_x^1\beta_y^{k-1} & \vdots \\ 0 & & & \cdots & \beta_y^k \end{pmatrix} \tag{53}$$

wobei $r_k$ einen Vektor darstellt in dem analog zu $R_k$ in Gleichung (33) alle Restterme $R_{kx,ky}$ enthalten sind.
In einer weiteren bevorzugten Ausführungsform gilt:

$$\begin{aligned}
\mathbf{s}_p &= \mathbf{T}^{(2)}(\hat{\mathbf{R}})\mathbf{T}^{(2)}(\hat{\boldsymbol{\beta}})\hat{\tilde{\mathbf{s}}}_p S(\hat{\mathbf{R}}) \\
\mathbf{e}_{p3} &= \mathbf{T}^{(3)}(\hat{\mathbf{R}})\mathbf{T}^{(3)}(\hat{\boldsymbol{\beta}})\hat{\tilde{\mathbf{e}}}_{p3} S(\hat{\mathbf{R}}) \\
\mathbf{e}_{p4} &= \mathbf{T}^{(4)}(\hat{\mathbf{R}})\mathbf{T}^{(4)}(\hat{\boldsymbol{\beta}})\hat{\tilde{\mathbf{e}}}_{p4} S(\hat{\mathbf{R}}) \\
&\quad etc.
\end{aligned} \tag{54}$$

wobei die $s_p$, $e_{p3}$, $e_{p4}$, ... in jedem Koordinatensystem gelten und wobei

$$\hat{\boldsymbol{\beta}} = \begin{pmatrix} \hat{\beta}_{xx} & 0 \\ 0 & \hat{\beta}_{yy} \end{pmatrix}$$

mit

$$\hat{\beta}_{xx} = \left(1 - \frac{\tau}{n}\hat{w}^{(2,0)}\right)^{-1}$$

$$\hat{\beta}_{yy} = \left(1 - \frac{\tau}{n}\hat{w}^{(0,2)}\right)^{-1}$$

$$\begin{pmatrix} \hat{w}^{(2,0)} \\ \hat{w}^{(1,1)} \\ \hat{w}^{(0,2)} \end{pmatrix} = \frac{1}{2}\left(w^{(2,0)} + w^{(0,2)}\right)\begin{pmatrix} 1 \\ 0 \\ 1 \end{pmatrix} + \frac{1}{2}\left(w^{(2,0)} - w^{(0,2)}\right)\sqrt{1 + \left(\frac{2w^{(1,1)}}{w^{(2,0)} - w^{(0,2)}}\right)^2}\begin{pmatrix} 1 \\ 0 \\ -1 \end{pmatrix}$$

eine Hilfsmatrix ist, die auf die Matrix

$$\boldsymbol{\beta} = \begin{pmatrix} \beta_{xx} & \beta_{xy} \\ \beta_{xy} & \beta_{yy} \end{pmatrix} = \left( \mathbf{1} - \frac{\tau}{n} \begin{pmatrix} w_o^{(2,0)} & w_o^{(1,1)} \\ w_o^{(1,1)} & w_o^{(0,2)} \end{pmatrix} \right)^{-1}$$

durch

$$\hat{\boldsymbol{\beta}} = \hat{\mathbf{R}} \boldsymbol{\beta} \hat{\mathbf{R}}^{-1}$$

zurückgeführt werden kann, wobei

$$\hat{\mathbf{R}} = \begin{pmatrix} \cos \varphi & -\sin \varphi \\ \sin \varphi & \cos \varphi \end{pmatrix}$$

eine Rotationsmatrix ist, die von dem speziellen System, in dem die x-Achse und die y-Achse mit den Richtungen der Hauptkrümmungen der ursprünglichen Wellenfront zusammenfallen, in das allgemeine System transformiert. Hierbei ist

$$\varphi = \frac{1}{2} \arctan \frac{2\beta_{xy}}{\beta_{yy} - \beta_{xx}}$$

Weiterhin wird in Gleichung (54) die Matrix

$$\mathbf{S}(\hat{\mathbf{R}}) := \begin{pmatrix} \hat{\mathbf{R}} & \mathbf{0} \\ \mathbf{0} & \mathbf{1} \end{pmatrix}$$

verwendet, und außerdem sind $\mathbf{T}^{(1)}, \mathbf{T}^{(2)}, \mathbf{T}^{(3)}, \mathbf{T}^{(4)}$ in Gleichung (54) matrixwertige Funktionen, die einer gegebenen Matrix

$$\mathbf{X} = \begin{pmatrix} a & b \\ c & d \end{pmatrix}$$

die Matrizen

26

$$\mathbf{T}^{(1)}(\mathbf{X}) = \begin{pmatrix} a & c \\ b & d \end{pmatrix}$$

$$\mathbf{T}^{(2)}(\mathbf{X}) = \begin{pmatrix} a^2 & 2ac & c^2 \\ ab & ad+bc & cd \\ b^2 & 2bd & d^2 \end{pmatrix}$$

$$\mathbf{T}^{(3)}(\mathbf{X}) = \begin{pmatrix} a^3 & 3a^2c & 3ac^2 & c^3 \\ a^2b & a(ad+2bc) & c(2ad+bc) & c^2d \\ ab^2 & b(2ad+bc) & d(ad+2bc) & cd^2 \\ b^3 & 3b^2d & 3bd^2 & d^3 \end{pmatrix}$$

$$\mathbf{T}^{(4)}(\mathbf{X}) = \begin{pmatrix} a^4 & 4a^3c & 6a^2c^2 & 4ac^3 & c^4 \\ a^3b & a^2(3bc+ad) & 3ac(bc+ad) & c^2(bc+3ad) & c^3d \\ a^2b^2 & 2ab(bc+ad) & b^2c^2+4abcd+a^2d^2 & 2cd(bc+ad) & c^2d^2 \\ ab^3 & b^2(bc+3ad) & 3bd(bc+ad) & d^2(3bc+ad) & cd^3 \\ b^4 & 4b^3d & 6b^2d^2 & 4bd^3 & d^4 \end{pmatrix}$$

zuordnen. Für noch höhere Ordnungen können Matrizen $\mathbf{T}^{(n)}$ mit $n>4$ definiert werden. Schließlich sind für die Ordnung $n = 2$

$$\hat{\tilde{\mathbf{s}}}_p = \begin{pmatrix} \hat{\tilde{w}}_p^{(2,0)} \\ \hat{\tilde{w}}_p^{(1,1)} \\ \hat{\tilde{w}}_p^{(0,2)} \end{pmatrix} = \begin{pmatrix} \hat{\beta}_{11}^{-1}\hat{w}_o^{(2,0)} \\ 0 \\ \hat{\beta}_{22}^{-1}\hat{w}_o^{(0,2)} \end{pmatrix} = \begin{pmatrix} \hat{w}_o^{(2,0)} \\ 0 \\ \hat{w}_o^{(0,2)} \end{pmatrix} - \frac{\tau}{n}\begin{pmatrix} \hat{w}_o^{(2,0)2} \\ 0 \\ \hat{w}_o^{(0,2)2} \end{pmatrix},$$

für die Ordnung $n = 3$

$$\hat{\tilde{\mathbf{e}}}_{p3} = \begin{pmatrix} \hat{\tilde{w}}_p^{(3,0)} \\ \hat{\tilde{w}}_p^{(2,1)} \\ \hat{\tilde{w}}_p^{(1,2)} \\ \hat{\tilde{w}}_p^{(0,3)} \end{pmatrix} = \begin{pmatrix} \hat{w}_o^{(3,0)} \\ \hat{w}_o^{(2,1)} \\ \hat{w}_o^{(1,2)} \\ \hat{w}_o^{(0,3)} \end{pmatrix}$$

und für die Ordnung $n = 4$

$$\hat{\bar{\mathbf{e}}}_{p4} = \begin{pmatrix} \hat{\bar{w}}_p^{(4,0)} \\ \hat{\bar{w}}_p^{(3,1)} \\ \hat{\bar{w}}_p^{(2,2)} \\ \hat{\bar{w}}_p^{(1,3)} \\ \hat{\bar{w}}_p^{(0,4)} \end{pmatrix} = \begin{pmatrix} \hat{w}_o^{(4,0)} \\ \hat{w}_o^{(3,1)} \\ \hat{w}_o^{(2,2)} \\ \hat{w}_o^{(1,3)} \\ \hat{w}_o^{(0,4)} \end{pmatrix} + \frac{\tau}{n} \begin{pmatrix} 3\left(\hat{\beta}_{11}\hat{w}_o^{(3,0)2} + \hat{\beta}_{22}\hat{w}_o^{(2,1)2} - \hat{w}_o^{(2,0)4}\right) \\ 3\hat{w}_o^{(2,1)}\left(\hat{\beta}_{11}\hat{w}_o^{(3,0)} + \hat{\beta}_{22}\hat{w}_o^{(1,2)}\right) \\ \hat{w}_o^{(1,2)}\left(\hat{\beta}_{11}\hat{w}_o^{(3,0)} + 2\hat{\beta}_{22}\hat{w}_o^{(1,2)}\right) + \hat{w}_o^{(2,1)}\left(2\hat{\beta}_{11}\hat{w}_o^{(2,1)} + \hat{\beta}_{22}\hat{w}_o^{(0,3)}\right) - \hat{w}_o^{(2,0)2}\hat{w}_o^{(0,2)2} \\ 3\hat{w}_o^{(1,2)}\left(\hat{\beta}_{11}\hat{w}_o^{(2,1)} + \hat{\beta}_{22}\hat{w}_o^{(0,3)}\right) \\ 3\left(\hat{\beta}_{11}\hat{w}_o^{(1,2)2} + \hat{\beta}_{22}\hat{w}_o^{(0,3)2} - \hat{w}_o^{(0,2)4}\right) \end{pmatrix}$$

als Ausdrücke für Lösungen gegeben, auf denen durch die Transformation in Gleichung (54) die Lösungen für die propagierten Wellenfronten gebildet werden können.

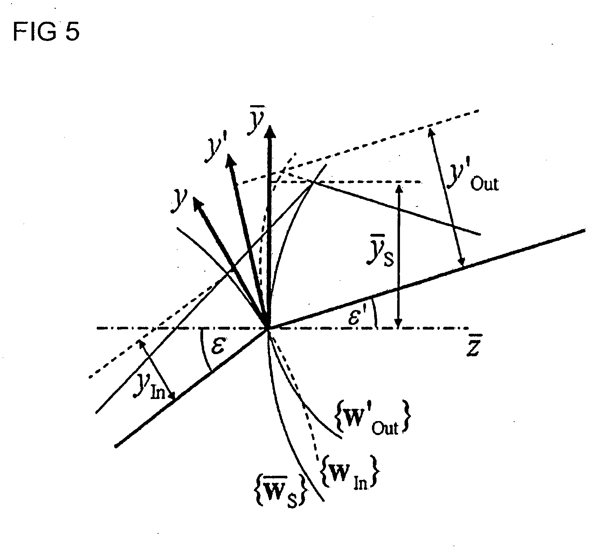

Im Folgenden wird nun dargestellt, wie in bevorzugter Weise die Aberrationen eines Brillenglases bei dessen Optimierung berücksichtigt werden, indem die Wellenfronten in verschiedenen, relativ zueinander rotierten Koordinatensystemen beschrieben werden. Wie bereits mit Bezug auf Fig. 1 und Fig. 2 beschrieben wurde, werden die Koordinatensysteme vorzugsweise durch die Schnittpunkte des Hauptstrahls 10 mit der brechenden Fläche 14, 16, durch die brechende Fläche und durch die Richtung des Hauptstrahls 10 festgelegt. Um für den Vorgang der Brechung an einer brechenden Fläche eine einlaufende Wellenfront, die brechende Fläche selbst und die auslaufende Wellenfront zu beschreiben, werden vorzugsweise drei verschiedene lokale kartesische Koordinatensysteme ($x$, $y$, $z$ ($\bar{x}$, $\bar{y}$, $\bar{z}$) und ($x$', $y$', $z$') verwendet. Der Ursprung all dieser Koordinatensysteme fällt vorzugsweise mit dem Schnittpunkt des Hauptstrahls 10 mit der brechenden Fläche zusammen. Während die Systeme die Normalenrichtung zur Brechungsebene (also die Ebene in der der einfallende und auslaufende Hauptstrahl liegen) als gemeinsame Achse $x = x' = \bar{x}$ besitzen, zeigt $z$ -Achse entlang des einfallenden Hauptstrahls, die $z$' -Achse entlang des auslaufenden Hauptstrahls und die $\bar{z}$ -Achse entlang Normalen der brechenden Fläche. Die Orientierungen der -Achse, -Achse und -Achse ist vorzugsweise derart gewählt, dass jedes System rechts-händig ist (siehe Fig. 5)

Beim Übergang zwischen den Koordinatensystemen hängen jegliche Vektorgrößen **v** über folgende Beziehungen

$$\mathbf{v} = \mathbf{R}(\varepsilon)\bar{\mathbf{v}}, \quad \mathbf{v}' = \mathbf{R}(\varepsilon')\bar{\mathbf{v}} \tag{55}$$

voneinander ab, wobei R für die Rotationen um die gemeinsame x-Achse steht und durch die dreidimensionale Rotationsmatrix definiert ist

$$\mathbf{R}(\varepsilon) = \begin{pmatrix} 1 & 0 & 0 \\ 0 & \cos\varepsilon & -\sin\varepsilon \\ 0 & \sin\varepsilon & \cos\varepsilon \end{pmatrix} \tag{56}$$

Bei einer Rotation des Koordinatensystems um den Winkel $\alpha$ um die z-Achse wird die Koordinatentransformation durch

$$\begin{aligned} \tilde{x} &= x\cos\alpha - y\sin\alpha \\ \tilde{y} &= x\sin\alpha + y\cos\alpha \end{aligned} \quad \text{oder} \quad \begin{pmatrix} \tilde{x} \\ \tilde{y} \end{pmatrix} = \mathbf{R}(\alpha)\begin{pmatrix} x \\ y \end{pmatrix} \tag{57}$$

beschrieben, mit der Rotationsmatrix

$$\mathbf{R}(\alpha) = \begin{pmatrix} \cos\alpha & -\sin\alpha \\ \sin\alpha & \cos\alpha \end{pmatrix} \tag{58}$$

Damit ist die Wellenfront w im rotierten Koordinatensystem $\tilde{x}, \tilde{y}$ beschrieben durch

$$\tilde{w}(\tilde{x}, \tilde{y}) = w(x(\tilde{x}, \tilde{y}), y(\tilde{x}, \tilde{y})) \tag{59}$$

Leitet man die Wellenfront w nach $\tilde{x}, \tilde{y}$ ab, erhält man die neuen Koeffizienten $\tilde{a}_{m,k-m}$ relativ zu den Koeffizienten $a_{m,k-m}$.

$$\tilde{a}_{m,k-m} = \frac{\partial^k}{\partial \tilde{x}^m \partial \tilde{y}^{k-m}} w(x(\tilde{x}, \tilde{y}), y(\tilde{x}, \tilde{y})) \Big|_{\tilde{x}=0, \tilde{y}=0} \tag{60}$$

In zweiter Ordnung werden die Aberrationen vorzugsweise durch den Vektor

$$\mathbf{s} = \begin{pmatrix} S_{xx} \\ S_{xy} \\ S_{yy} \end{pmatrix} \tag{61}$$

dargestellt. Wenn das Koordinatensystem um den Winkel $\alpha$ rotiert wird, werden die neuen Aberrationen $\tilde{\mathbf{s}}$ zweiter Ordnung (im rotierten Koordinatensystem $(\tilde{x}, \tilde{y})$) über

$$\tilde{\mathbf{s}} = \mathbf{R}_2(\alpha)\mathbf{s} \tag{62}$$

berechnet mit

$$\mathbf{R}_2(\alpha) = \begin{pmatrix} \cos^2\alpha & -2\cos\alpha\sin\alpha & \sin^2\alpha \\ \cos\alpha\sin\alpha & \cos^2\alpha - \sin^2\alpha & -\cos\alpha\sin\alpha \\ \sin^2\alpha & 2\cos\alpha\sin\alpha & \cos^2\alpha \end{pmatrix} \tag{63}$$

Für höhere Ordnungen der Abbildungsfehler wird die Abhängigkeit der neuen Koeffizienten $\tilde{a}_{m,k-m}$ von den alten Koeffizienten $a_{m,k-m}$ vorzugsweise durch

$$\begin{pmatrix} \tilde{a}_{00} \\ \tilde{a}_{01} \\ \tilde{a}_{10} \\ \tilde{a}_{02} \\ \tilde{a}_{11} \\ \tilde{a}_{20} \\ \tilde{a}_{03} \\ \tilde{a}_{12} \\ \tilde{a}_{21} \\ \vdots \end{pmatrix} = \mathbf{R}_{Pot}(N,\alpha) \begin{pmatrix} a_{00} \\ a_{01} \\ a_{10} \\ a_{02} \\ a_{11} \\ a_{20} \\ a_{03} \\ a_{12} \\ a_{21} \\ \vdots \end{pmatrix} \tag{64}$$

ausgedrückt. Die resultierende Rotationsmatrix weist die Blockstruktur auf, welche zeigt, dass die Koeffizienten $\tilde{a}_{m,k\text{-}m}$ der Ordnung $k$ nur von Koeffizienten $a_{m,k\text{-}m}$ derselben Ordnung k abhängen. Die Rotationsmatrix für die ersten 15 Koeffizienten ($N = 15$) bis zur Ordnung (k =4) lautet damit

$$\mathbf{R}_{Pot}(15,\alpha) = \begin{pmatrix} 1 & 0 & & \cdots & & 0 \\ 0 & \mathbf{R}_1(\alpha) & & & & \vdots \\ & & \mathbf{R}_2(\alpha) & & & \\ \vdots & & & \mathbf{R}_3(\alpha) & & 0 \\ 0 & \cdots & & & 0 & \mathbf{R}_4(\alpha) \end{pmatrix} \tag{65}$$

Die Matrixelemente der Blockstrukturen $\mathbf{R}_K(\alpha)$ der ersten Ordnung ($k$=1) ergeben die bekannte Rotationsmatrix

$$\mathbf{R}_1(\alpha) = \mathbf{R}(\alpha) = \begin{pmatrix} \cos\alpha & -\sin\alpha \\ \sin\alpha & \cos\alpha \end{pmatrix} \tag{66}$$

In zweiter Ordnung ($k$=2) lautet die Rotationsmatrix

$$\mathbf{R}_2(\alpha) = \begin{pmatrix} \cos^2\alpha & -2\cos\alpha\sin\alpha & \sin^2\alpha \\ \cos\alpha\sin\alpha & \cos^2\alpha - \sin^2\alpha & -\cos\alpha\sin\alpha \\ \sin^2\alpha & 2\cos\alpha\sin\alpha & \cos^2\alpha \end{pmatrix} \tag{67}$$

in dritter Ordnung ($k$=3)

$$\mathbf{R}_3(\alpha) = \begin{pmatrix} \cos^3\alpha & -3\cos^2\alpha\sin\alpha & 3\cos\alpha\sin^2\alpha & \sin^3\alpha \\ \cos^2\alpha\sin\alpha & \cos^3\alpha - 2\cos\alpha\sin^2\alpha & \sin^3\alpha - 2\cos^2\alpha\sin\alpha & \cos\alpha\sin^2\alpha \\ \cos\alpha\sin^2\alpha & -(\sin^3\alpha - 2\cos^2\alpha\sin\alpha) & \cos^3\alpha - 2\cos\alpha\sin^2\alpha & \cos^2\alpha\sin\alpha \\ \sin^3\alpha & 3\cos\alpha\sin^2\alpha & 3\cos^2\alpha\sin\alpha & \cos^3\alpha \end{pmatrix} \quad (68)$$

und in vierter Ordnung ($k=4$)

$$\mathbf{R}_4(\alpha) =$$

$$\begin{pmatrix} \cos^4\alpha & -\cos^3\alpha\sin\alpha & \cos^2\alpha\sin^2\alpha & -\cos\alpha\sin^3\alpha & \sin^4\alpha \\ 4\cos^3\alpha\sin\alpha & \cos^4\alpha - 3\cos^2\alpha\sin^2\alpha & 2(\cos\alpha\sin^3\alpha - \cos^3\alpha\sin\alpha) & -(\sin^4\alpha - 3\cos^2\alpha\sin^2\alpha) & -4\cos\alpha\sin^3\alpha \\ 6\cos^2\alpha\sin^2\alpha & 3(\cos^3\alpha\sin\alpha - \cos\alpha\sin^3\alpha) & \cos^4\alpha - 4\cos^2\alpha\sin^2\alpha + \sin^4\alpha & 3(\cos\alpha\sin^3\alpha - \cos^3\alpha\sin\alpha) & 6\cos^2\alpha\sin^2\alpha \\ 4\cos\alpha\sin^3\alpha & -(\sin^4\alpha - 3\cos^2\alpha\sin^2\alpha) & -2(\cos\alpha\sin^3\alpha - \cos^3\alpha\sin\alpha) & \cos^4\alpha - 3\cos^2\alpha\sin^2\alpha & -4\cos^3\alpha\sin\alpha \\ \sin^4\alpha & \cos\alpha\sin^3\alpha & \cos^2\alpha\sin^2\alpha & \cos^3\alpha\sin\alpha & \cos^4\alpha \end{pmatrix}$$

$$(69)$$

Die Gleichungen (66) bis (69) zeigen, dass die Blockmatrixelemente $e_{i,j}(\alpha)$ der jeweiligen Rotationsmatrix $\mathbf{R}_k(\alpha)$ die Symmetrie $e_{i,j}(\alpha) = e_{k+2-i,k+2-j}(-\alpha)$ aufweisen. Mit $c = \cos\alpha$, $s = \sin\alpha$ können die Blockmatrizen vereinfacht werden zu

$$\mathbf{R}_1(\alpha) = \begin{pmatrix} c^k s^0 & * \\ c^0 s^k & * \end{pmatrix}$$

$$\mathbf{R}_2(\alpha) = \begin{pmatrix} c^k s^0 & * & * \\ kc^1 s^1 & c^2 - s^2 & * \\ c^0 s^k & c^1 s^1 & * \end{pmatrix}$$

$$\mathbf{R}_3(\alpha) = \begin{pmatrix} c^k s^0 & * & * & * \\ kc^{k-1} s^1 & c^k - (k-1)c^1 s^{k-1} & * & * \\ kc^1 s^{k-1} & -s^k + (k-1)c^{k-1} s^1 & * & * \\ c^0 s^k & c^1 s^{k-1} & c^{k-1} s^1 & * \end{pmatrix}$$

$$\mathbf{R}_4(\alpha) = \begin{pmatrix} c^k s^0 & * & * & * & * \\ kc^{k-1} s^1 & c^k - (k-1)c^2 s^2 & * & * & * \\ 2(k-1)c^2 s^2 & (k-1)(c^{k-1} s^1 - c^1 s^{k-1}) & c^k - 4c^2 s^2 + s^k & * & * \\ kc^1 s^{k-1} & -s^k + (k-1)c^2 s^2 & 2(c^{k-1} s^1 - c^1 s^{k-1}) & * & * \\ c^0 s^k & c^1 s^{k-1} & c^2 s^2 & c^{k-1} s^1 & * \end{pmatrix}$$

$$\mathbf{R}_5(\alpha) = \begin{pmatrix} c^k s^0 & * & * & * & * & * \\ kc^{k-1} s^1 & c^k - (k-1)c^{k-2} s^2 & * & * & * & * \\ 2kc^{k-2} s^2 & (k-1)c^{k-1} s^1 - 2(k-2)c^2 s^{k-2} & c^k - 6c^{k-2} s^2 + 3c^1 s^{k-1} & * & * & * \\ 2kc^2 s^{k-2} & -(k-1)c^1 s^{k-1} + 2(k-2)c^{k-2} s^2) & s^k - 6c^2 s^{k-2} + 3c^{k-1} s^1 & * & * & * \\ kc^1 s^{k-1} & -s^k + (k-1)c^2 s^{k-2} & -2c^1 s^{k-1} + 3c^{k-2} s^2 & 2c^{k-1} s^1 - 3c^2 s^{k-2} & * & * \\ c^0 s^k & c^1 s^{k-1} & c^2 s^{k-2} & c^{k-2} s^2 & c^{k-1} s^1 & * \end{pmatrix}$$

(70)

In einer bevorzugten Ausführungsform werden die Abbildungsfehler in Form von Zernike-Polynomen beschrieben. Die Rotation wird in diesem Fall im Raum der Zernike-Polynome ausgeführt. Die Wellenfront wird dabei vorzugsweise aufgespannt mit den Zernike-Polynomen in Polarkoordinaten:

$$Z_{0,0}(\rho,\varphi) = 1$$
$$Z_{1,1}(\rho,\varphi) = 2\rho \cos\varphi$$
$$Z_{1,-1}(\rho,\varphi) = 2\rho \sin\varphi$$
$$Z_{2,0}(\rho,\varphi) = \sqrt{3}\left(2\rho^2 - 1\right) \qquad (71)$$
$$Z_{2,2}(\rho,\varphi) = \sqrt{6}\rho^2 \cos 2\varphi$$
$$Z_{2,-2}(\rho,\varphi) = \sqrt{6}\rho^2 \sin 2\varphi$$
$$\vdots$$

mit

$$W(x, y) = \sum_{k=0}^{\infty} \sum_{m} c_{k,m} Z_{k,m} \qquad (72)$$

Die einer Wellenfront $w(x, y)$ entsprechenden Zernike-Koeffizienten werden dann vorzugsweise über die Integrale

$$c_k^m = \frac{1}{\pi r_0^2} \iint_{\text{pupil}} Z_k^m \left( \frac{x}{r_0}, \frac{y}{r_0} \right) w(x, y) dx dy \qquad (73)$$

bestimmt, wobei $r := \sqrt{x^2 + y^2}$, $x = \rho\cos\varphi$, $y = \rho\sin\varphi$ und $r_0$ die Pupillengröße ist.

Bei der bevorzugten die Darstellung mittels Zernike-Polynomen in Polarkoordinaten stellt sich die Rotation für die Zernike-Koeffizienten sehr einfach dar. Der Vektor von Zernike-Koeffizienten wird durch die Rotation

$$\begin{pmatrix} \tilde{a}_{00} \\ \tilde{a}_{01} \\ \tilde{a}_{10} \\ \tilde{a}_{02} \\ \tilde{a}_{11} \\ \tilde{a}_{20} \\ \tilde{a}_{03} \\ \tilde{a}_{12} \\ \tilde{a}_{21} \\ \vdots \end{pmatrix} = \mathbf{R}_{Pol}(N,\alpha) \begin{pmatrix} a_{00} \\ a_{01} \\ a_{10} \\ a_{02} \\ a_{11} \\ a_{20} \\ a_{03} \\ a_{12} \\ a_{21} \\ \vdots \end{pmatrix} \qquad (74)$$

transformiert. In einer Blockmatrixdarstellung basiert die Rotationsmatrix direkt auf der elementaren Rotationsmatrix aus Gleichung (57). Für $N = 15$ hat die Rotationsmatrix die Form:

$$\mathbf{R}_{Zernike}(15,\alpha) = \begin{pmatrix} 1 & \cdots & & & & \cdots & & 0 \\ 0 & \mathbf{R}(\alpha) & & & & & & \vdots \\ \vdots & & 1 & & & & & \\ & & & \mathbf{R}(2\alpha) & & & & \\ & & & & \mathbf{R}(\alpha) & & & \\ & & & & & \mathbf{R}(3\alpha) & & \\ & & & & & & 1 & \\ & & & & & & \mathbf{R}(2\alpha) & \vdots \\ 0 & \cdots & & & & \cdots & 0 & \mathbf{R}(4\alpha) \end{pmatrix} \tag{75}$$

Dabei ist die Veranschaulichung jeder zur selben radialen Ordnung gehörende Block eingerahmt.

Wenn die Wellenfront über eine Reihe wie in den Gleichungen (70) und (71) dargestellt wird, ergibt sich auch für das Integral aus Gleichung (72) eine Reihendarstellung, d.h. eine Linearkombination aus den Koeffizienten $a_{m,k-m}$.

Werden die Koeffizienten $c_k^m$ bzw. $a_{m,k-m}$ als Vektoren bis zu einer bestimmten Ordnung k summiert, kann eine Übergangsmatrix T(N) zwischen dem Zernike-Subraum und dem Taylor-Reihen-Subraum der Ordnung $k$ angegeben werden durch

$$\begin{pmatrix} c_{0,0} \\ c_{1,1} \\ c_{1,-1} \\ c_{2,0} \\ c_{2,2} \\ c_{2,-2} \\ c_{3,1} \\ c_{3,-1} \\ c_{3,3} \\ \vdots \end{pmatrix} = \mathbf{T}(N) \begin{pmatrix} E \\ E_x \\ E_y \\ E_{xx} \\ E_{xy} \\ E_{yy} \\ E_{xxx} \\ E_{xxy} \\ \vdots \\ E_{yy\cdots y} \end{pmatrix} = n\mathbf{T}(N) \begin{pmatrix} a_{00} \\ a_{01} \\ a_{10} \\ a_{02} \\ a_{11} \\ a_{20} \\ a_{03} \\ a_{12} \\ a_{21} \\ \vdots \end{pmatrix} \tag{76}$$

mit $\mathbf{T}(N) = \mathbf{Z}(N)\mathbf{D}(N)$, wobei z.B. für $N = 9$

$$\mathbf{D}(9) = \begin{pmatrix} 1 & \cdots & & & & & & & \cdots & 0 \\ 0 & r_0 & & & & & & & & \vdots \\ \vdots & & r_0 & & & & & & & \\ & & & r_0^2 & & & & & & \\ & & & & r_0^2 & & & & & \\ & & & & & r_0^2 & & & & \\ & & & & & & r_0^3 & & & \\ \vdots & & & & & & & r_0^3 & & \vdots \\ 0 & \cdots & & & & & \cdots & 0 & & r_0^3 \end{pmatrix} \tag{77}$$

eine Matrix bezeichnet, die die richtige Potenz des Pupillenradius angibt. Die grundsätzliche Transformationsmatrix Z(N) wird bestimmt durch Zernike-Expansion der Potenzreihe. Vorzugsweise dabei für die Transformationsmatrix für $N = 15$ folgende Darstellung bereitgestellt:

$$\mathbf{Z}^{-1}(15) = \begin{pmatrix} 1 & 0 & 0 & -\sqrt{3} & 0 & 0 & 0 & 0 & 0 & 0 & * & 0 & 0 & 0 & 0 \\ 0 & 2 & 0 & 0 & 0 & 0 & -4\sqrt{2} & 0 & 0 & 0 & 0 & 0 & 0 & \vdots & \vdots \\ \vdots & 0 & 2 & 0 & 0 & 0 & 0 & -4\sqrt{2} & 0 & 0 & 0 & 0 & 0 & & \\ & \vdots & 0 & 4\sqrt{3} & 2\sqrt{6} & 0 & 0 & 0 & 0 & 0 & * & 0 & * & & \\ & & \vdots & 0 & 0 & 2\sqrt{6} & 0 & 0 & 0 & 0 & 0 & * & 0 & & \\ & & & 4\sqrt{3} & -2\sqrt{6} & 0 & 0 & 0 & 0 & 0 & * & 0 & * & & \\ & & & 0 & 0 & 0 & 36\sqrt{2} & 0 & 12\sqrt{2} & 0 & 0 & 0 & 0 & & \\ & & \vdots & \vdots & \vdots & 0 & 12\sqrt{2} & 0 & 12\sqrt{2} & 0 & 0 & 0 & & & \\ & & & & & 12\sqrt{2} & 0 & -12\sqrt{2} & 0 & 0 & 0 & 0 & \vdots & \vdots & \\ & & & & & 0 & 36\sqrt{2} & 0 & -12\sqrt{2} & 0 & 0 & 0 & 0 & 0 & \\ & & & & & \vdots & 0 & \vdots & 0 & * & 0 & * & 0 & * & \\ & & & & & & \vdots & & \vdots & 0 & * & 0 & * & 0 & \\ & & & & & & & & & * & 0 & * & 0 & * & \\ \vdots & \vdots & \vdots & \vdots & \vdots & \vdots & \vdots & \vdots & \vdots & \vdots & 0 & * & 0 & * & 0 \\ 0 & 0 & 0 & 0 & 0 & 0 & 0 & 0 & 0 & 0 & * & 0 & * & 0 & * \end{pmatrix}$$

Auch in dieser Gleichung sind die Blöcke zur selben radialen Ordnung zur Veranschaulichung eingerahmt. Man erkennt, dass auch nicht verschwindende Elemente außerhalb der Diagonalblöcke existieren. Diese haben aber keinen Einfluss auf die Rotationsmatrix $\mathbf{R}_{Pot}(N,\alpha)$.

Um die Rotationsmatrix $\mathbf{R}_{Pot}(N,\alpha)$ zu ermitteln, wird $\mathbf{R}_{Zernike}(N,\alpha)$ auf das Koeffizientensystem der Potenzreihenentwicklung mit Gleichung (76) transformiert:

$$\begin{pmatrix} \tilde{a}_{00} \\ \tilde{a}_{01} \\ \tilde{a}_{10} \\ \tilde{a}_{02} \\ \tilde{a}_{11} \\ \tilde{a}_{20} \\ \tilde{a}_{03} \\ \tilde{a}_{12} \\ \tilde{a}_{21} \\ \vdots \end{pmatrix} = \mathbf{T}^{-1}(N) \begin{pmatrix} \tilde{c}_{0,0} \\ \tilde{c}_{1,1} \\ \tilde{c}_{1,-1} \\ \tilde{c}_{2,0} \\ \tilde{c}_{2,2} \\ \tilde{c}_{2,-2} \\ \tilde{c}_{3,1} \\ \tilde{c}_{3,-1} \\ \tilde{c}_{3,3} \\ \vdots \end{pmatrix} = \mathbf{T}^{-1}(N)\mathbf{R}_{Zernike}(N,\alpha) \begin{pmatrix} c_{0,0} \\ c_{1,1} \\ c_{1,-1} \\ c_{2,0} \\ c_{2,2} \\ c_{2,-2} \\ c_{3,1} \\ c_{3,-1} \\ c_{3,3} \\ \vdots \end{pmatrix} = \mathbf{T}^{-1}(N)\mathbf{R}_{Zernike}(N,\alpha)\mathbf{T}(N) \begin{pmatrix} a_{00} \\ a_{01} \\ a_{10} \\ a_{02} \\ a_{11} \\ a_{20} \\ a_{03} \\ a_{12} \\ a_{21} \\ \vdots \end{pmatrix}$$

Daraus folgt

$$\mathbf{R}_{Pot}(N,\alpha) = \mathbf{T}^{-1}(N)\mathbf{R}_{Zernike}(N,\alpha)\mathbf{T}(N) \tag{78}$$

mit einer Blockstruktur der Form

$$\mathbf{R}_{Pot}(15) = \begin{pmatrix} 1 & 0 & & \cdots & & 0 \\ 0 & \mathbf{R}_1(\alpha) & & & & \vdots \\ & & \mathbf{R}_2(\alpha) & & & \\ \vdots & & & \mathbf{R}_3(\alpha) & & 0 \\ 0 & \cdots & & & 0 & \mathbf{R}_4(\alpha) \end{pmatrix} \tag{79}$$

wobei die Blockmatrizen identisch zu denen von Gleichung (70) sind.

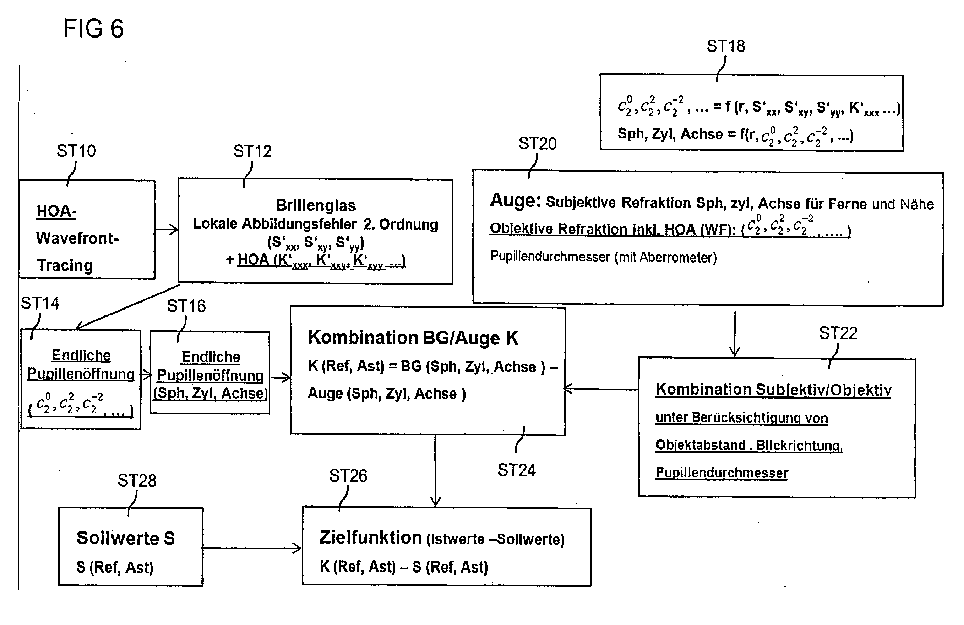

Fig. 6 veranschaulicht ein beispielhaftes Verfahren zum individuellen Optimieren eines Brillenglases unter Berücksichtigung von Abbildungsfehlern höherer Ordnung (HOA higher order aberrations) sowohl des Brillenglases als auch des Auges. In einem Schritt ST12 werden nicht nur die lokalen Abbildungsfehler 2. Ordnung (S'$_{xx}$, S'$_{xy}$, S'$_{yy}$) sondern auch die Abbildungsfehler höher Ordnung (K'$_{xxx}$, K'$_{xxy}$, K'$_{xyy}$ etc.) an der Scheitelpunktkugel auf Basis von Wavefront-Tracing (ST10) berechnet.

Aus diesen werden dann aus den lokalen Aberrationen mit Hilfe von Zernikepolynomen und/oder einer anderen geeigneten Metrik vorzugsweise unter Berücksichtigung des Pupillendurchmessers bzw. Pupillenradius die Sphäre-, Zylinder- und Achslagen-Werte (sph, zyl, A) des Brillenglases berechnet. Vorzugsweise werden somit in einem Schritt ST14 zunächst Zernikekoeffizienten ($c_2^0, c_2^2, c_2^{-2}, \dots$) ermittelt. Da man nun auch die lokalen Abbildungsfehler höherer Ordnung kennt, kann man die idealen sph, zyl, A Werte des Brillenglases für eine endliche Pupillenöffnung berechnen, welche vorzugsweise den oben beschriebenen transformierten Werten entsprechen. Sowohl der Zusammenhang zwischen den lokalen Aberrationen (S'$_{xx}$, S'$_{xy}$, S'$_{yy}$, K'$_{xxx}$, K'$_{xxy}$, K'$_{xyy}$, ...) und den Zernike-Koeffizienten ($c_2^0, c_2^2, c_2^{-2}, \dots$), wie er insbesondere in Schritt ST14 herangezogen wird, als auch der Zusammenhang zwischen den Zernike-Koeffizienten ($c_2^0, c_2^2, c_2^{-2}, \dots$) und den Werten für Sphäre (Sph), Zylinder (Zyl bzw. Cyl) und Achslage (A bzw. α) werden insbesondere in einem Schritt ST18 als funktionaler Zusammenhänge

$$c_2^0, c_2^2, c_2^{-2}, \ldots = f(r, \text{'}_{xx}, S\text{'}_{xy}, S\text{'}_{yy}, K\text{'}_{xxx}, K\text{'}_{xxy}, K\text{'}_{xyy}, \ldots)$$ bzw. Sph, Zyl,

$$A = f(r, \quad c_2^0, c_2^2, c_2^{-2}, \ldots),$$ insbesondere unter Berücksichtigung des Pupillenradius r bereitgestellt.

Bevorzugt ist es nun, wenn die Pupillengröße r für jeden Durchblickpunkt variabel vorgegeben wird. Besonders bevorzugt, wenn die Pupillengröße als Funktion des Objektabstandes, der wiederum eine Funktion des Durchblickpunktes darstellt, vorgegeben wird. Dies kann z.B. auf dem Nahreflex basieren, so dass bei nahen Objekten der angenommene Pupillendurchmesser abnimmt.

Bei der Refraktionsbestimmung (ST20) werden vorzugsweise nicht nur subjektiv die Werte für die Sphäre, den Zylinder und die Achslage, insbesondere für die Ferne und Nähe, bestimmt, sondern zusätzlich mit einem Aberrometer die Abbildungsfehler höherer Ordnung $(c_2^0, c_2^2, c_2^{-2}, \ldots)$. Dabei werden in einem Schritt ST22 die subjektiven und objektiven Refraktionsdaten insbesondere unter Berücksichtigung von Objektabstand, Blickrichtung und Pupillendurchmessen kombiniert. Somit ist es möglich, ideale (transformierte) Verordnungswerte (sph, zyl, A) insbesondere für verschiedene Pupillendurchmesser in Abhängigkeit der Durchblickstelle mit einer geeigneten Metrik zu berechnen. Besonders bevorzugt ist es, wenn die idealen Verordnungen einmal berechnet und dann als Funktion des Objektabstandes hinterlegt werden. Weiterhin ist es bevorzugt, wenn z.B. mit dem Aberrometer auch der individuelle Pupillendurchmesser unter photopischen (kleine Pupille) und mesopischen (große Pupille) Bedingungen bestimmt wird. Andernfalls müssen Standardwerte aus der Literatur verwendet werden. Anschließend können in bekannter Weise die sphäro-zylindrischen Werte des Brillenglases (BG) mit denen des Auges kombiniert werden (ST24) (Kombination BG/Auge K: K(Ref,Ast) = BG(Sph,Zyl,Achse) - Auge(Sph,Zyl,Achse). Die Zielfunktion (ST26), in die insbesondere die in einem Schritt ST28 bereitgestellten Sollwerte S(Ref, Ast) einfließen, bleibt dann vorzugsweise unverändert. In sie fließen insbesondere die Differenzen zwischen den in Schritt ST24 ermittelten Kombinationswerten K und den Sollwerten S ein: K(Ref,Ast) - S(Ref,Ast).

**Bezugszeichenliste**

| | |
|---|---|
| 10 | Hauptstrahl |
| 12 | Auge |
| 14 | erste brechende Fläche (Vorderfläche des Brillenglases) |
| 16 | zweite brechende Fläche (Rückfläche des Brillenglases) |
| 18 | ursprüngliche Wellenfront |
| 20 | propagierte Wellenfront |
| 22 | Bildpunkt |
| 24 | benachbarter Strahl |

ST2, ST4    Propagation (und gegebenenfalls Rotation)

**Patentansprüche**

1. Computerimplementiertes Verfahren zum Berechnen oder Optimieren eines Brillenglases umfassend die Schritte:

- Vorgeben zumindest einer Fläche für das zu berechnende bzw. optimierende Brillenglas;
- Ermitteln des Verlaufs eines Hauptstrahls (10) durch zumindest einen Durchblickpunkt (*i*) der zumindest einen Fläche;
- Ermitteln eines ersten primären Satzes ($\mathbf{s}_{io}$) und eines zweiten primären Satzes ($\mathbf{e}_{iok}$) von Koeffizienten der lokalen Aberration einer von dem zumindest einen Durchblickpunkt (*i*) auslaufenden lokalen Wellenfront (18) in einer Umgebung des Hauptstrahls (10), wobei der erste primäre Satz von Koeffizienten ($\mathbf{s}_{io}$) die sphärische und astigmatische Aberration der auslaufenden lokalen Wellenfront und der zweite primäre Satz von Koeffizienten ($\mathbf{e}_{iok}$) eine weitere Aberration höherer Ordnung (k > 2) der auslaufenden lokalen Wellenfront festlegt;
- Vorgeben zumindest einer Funktion $\mathbf{e}_{pk} = f(\mathbf{e}_{ok})$, welche einem zweiten primären Satz von Koeffizienten ($\mathbf{e}_{ok}$) einen zweiten sekundären Satz von Koeffizienten ($\mathbf{e}_{pk}$) zuordnet, der die Aberration höherer Ordnung einer propagierten Wellenfront festlegt;

- Ermitteln einer Aberration höherer Ordnung einer entlang des Hauptstrahls (10) ausgehend von dem zumindest einen Durchblickpunkt ($i$) propagierten lokalen Wellenfront in Abhängigkeit von zumindest dem zweiten primären Satz von Koeffizienten ($\mathbf{e}_{iok}$) anhand der vorgegebenen Funktion $\mathbf{e}_{pk} = f(\mathbf{e}_{ok})$; und

- Berechnen oder Optimieren der zumindest einen Fläche des Brillenglases unter Berücksichtigung der ermittelten Aberration höherer Ordnung der propagierten lokalen Wellenfront,

wobei die Funktion $\mathbf{e}_{pk} = f(\mathbf{e}_{ok})$ als eine lineare Funktion $\mathbf{e}_{pk} = \mathbf{B}_k(\mathbf{e}_{ok} + \mathbf{r}_k)$ vorgegeben wird, in der der Proportionalitätsterm $\mathbf{B}_k$ vom ersten primären Satz von Koeffizienten ($\mathbf{s}_{io}$) aber nicht vom zweiten primären Satz von Koeffizienten ($\mathbf{e}_{ok}$) abhängt.

2. Verfahren nach Anspruch 1, wobei das Ermitteln eines ersten primären Satzes von Koeffizienten ein Ermitteln eines

Powervektors $\mathbf{s}_o = \begin{pmatrix} S_{oxx} \\ S_{oxy} \\ S_{oyy} \end{pmatrix}$ umfasst, wobei das Ermitteln eines zweiten primären Satzes von Koeffizienten ein

Ermitteln eines Komavektors $\mathbf{e}_{o3} = \begin{pmatrix} E_{oxxx} \\ E_{oxxy} \\ E_{oxyy} \\ E_{oyyy} \end{pmatrix}$ umfasst, und wobei als zumindest eine Funktion $\mathbf{e}_{p3} = f(\mathbf{e}_{o3})$ die

Funktion

$$\mathbf{e}_{p3} = \gamma^3 \begin{pmatrix} \beta_y^{-3} & 3\beta_y^{-2}\tfrac{d}{n}S_{xy} & 3\beta_y^{-1}(\tfrac{d}{n}S_{xy})^2 & (\tfrac{d}{n}S_{xy})^3 \\ \beta_y^{-2}\tfrac{d}{n}S_{xy} & \beta_y^{-1}(\tfrac{1}{\gamma}+3(\tfrac{d}{n}S_{xy})^2) & \tfrac{2}{\gamma}\tfrac{d}{n}S_{xy}+3(\tfrac{d}{n}S_{xy})^3 & \beta_x^{-1}(\tfrac{d}{n}S_{xy})^2 \\ \beta_y^{-1}(\tfrac{d}{n}S_{xy})^2 & \tfrac{2}{\gamma}\tfrac{d}{n}S_{xy}+3(\tfrac{d}{n}S_{xy})^3 & \beta_x^{-1}(\tfrac{1}{\gamma}+3(\tfrac{d}{n}S_{xy})^2) & \beta_x^{-2}\tfrac{d}{n}S_{xy} \\ (\tfrac{d}{n}S_{xy})^3 & 3\beta_x^{-1}(\tfrac{d}{n}S_{xy})^2 & 3\beta_x^{-2}\tfrac{d}{n}S_{xy} & \beta_x^{-3} \end{pmatrix} \mathbf{e}_{o3}$$

mit $\quad \gamma = \dfrac{1}{1 - \tfrac{d}{n}S_{oxx} - (\tfrac{d}{n}S_{oxy})^2 - \tfrac{d}{n}S_{oyy} + (\tfrac{d}{n})^2 S_{oxx}S_{oyy}} \quad , \quad \beta_x = \dfrac{1}{1 - \tfrac{d}{n}S_{oxx}} \quad$ und

$\beta_y = \dfrac{1}{1 - \tfrac{d}{n}S_{oyy}}$ vorgegeben wird.

3. Verfahren nach Anspruch 1 oder 2, wobei das Ermitteln eines ersten primären Satzes von Koeffizienten ein Ermitteln

eines Powervektors $\mathbf{s}_o = \begin{pmatrix} S_{oxx} \\ S_{oxy} \\ S_{oyy} \end{pmatrix}$ umfasst, wobei das Ermitteln eines zweiten primären Satzes von Koeffizienten ein Ermitteln eines Komavektors $\mathbf{e}_{o3} = \begin{pmatrix} E_{oxxx} \\ E_{oxxy} \\ E_{oxyy} \\ E_{oyyy} \end{pmatrix}$ und ein Ermitteln eines Sphärische-Aberration-Vektors

$$\mathbf{e}_{o3} = \begin{pmatrix} E_{oxxxx} \\ E_{oxxxy} \\ E_{oxxyy} \\ E_{oxyyy} \\ E_{oyyyy} \end{pmatrix}$$ umfasst, und wobei als zumindest eine Funktion $\mathbf{e}_{pk} = f(\mathbf{e}_{ok})$ die Funktion

$$\mathbf{e}_{p4} = \begin{pmatrix} \beta_x^4 & \cdots & & \cdots & 0 \\ \vdots & \beta_x^3\beta_y^1 & & & \vdots \\ & & \beta_x^2\beta_y^2 & & \\ \vdots & & & \beta_x^1\beta_y^3 & \vdots \\ 0 & & & \cdots & \beta_y^4 \end{pmatrix}$$

$$\left( \mathbf{e}_{o4} + \frac{d}{n} \begin{pmatrix} 3\left( \beta_x E_{oxxx}^2 + \beta_y E_{oxxy}^2 - \dfrac{S_{oxx}^4}{n^2} \right) \\ 3E_{oxxy}\left( \beta_x E_{oxxx} + \beta_y E_{oxyy} \right) \\ \beta_x(2E_{oxxy}^2 + E_{oxxx}E_{oxyy}) + \beta_y(2E_{oxyy}^2 + E_{oxxy}E_{oyyy}) - \left( \dfrac{S_{oxx}S_{oyy}}{n} \right)^2 \\ 3E_{oxyy}\left( \beta_x E_{oxxy} + \beta_y E_{oyyy} \right) \\ 3\left( \beta_x E_{oxyy}^2 + \beta_y E_{oyyy}^2 - \dfrac{S_{oyy}^4}{n^2} \right) \end{pmatrix} \right)$$

mit

$$\beta_x = \frac{1}{1 - \frac{d}{n}S_{oxx}} \quad \text{und} \quad \beta_y = \frac{1}{1 - \frac{d}{n}S_{oyy}} \quad \text{vorgegeben wird.}$$

4. Verfahren nach einem der vorangegangenen Ansprüche, außerdem umfassend ein Bestimmen eines Winkels $\alpha$ zwischen einer ersten Brechungsebene des Hauptstrahls an einer ersten Fläche des Brillenglases und einer zweiten Brechungsebene des Hauptstrahls an einer zweiten Fläche des Brillenglases, wobei das Ermitteln einer Aberration höherer Ordnung umfasst

- Ermitteln eines zweiten sekundären Satzes ($\mathbf{e}_{ipk}$) von Koeffizienten der lokalen Aberration der propagierten Wellenfront; und
- Ermitteln eines transformierten zweiten sekundären Satzes ($\tilde{\mathbf{e}}_{ipk}$) von Koeffizienten in Abhängigkeit vom bestimmten Winkel $\alpha$.

5. Verfahren nach einem der vorangegangenen Ansprüche, welches außerdem ein Erfassen von Verordnungsdaten $V$ umfasst wobei die Verordnungsdaten Daten bezüglich der sphärischen Wirkung $Sph_V$, des Betrags des Astigmatismus $Zyl_V$, der Astigmatismusachse $Achse_V$ sowie zumindest einer weiteren Refraktion höherer Ordnung $HOA_V$ umfassen.

6. Verfahren nach Anspruch 6, wobei das Erfassen von Verordnungsdaten ein Erfassen von ersten Verordnungsdaten für eine erste Objektentfernung und von zweiten Verordnungsdaten für eine zweite Objektentfernung umfasst.

7. Verfahren nach einem der vorangegangenen Ansprüche, außerdem umfassend:

   - Vorgabe eines Objektabstandsmodells $A1(x, y)$, wobei $A1$ die Objektentfernung und $(x, y)$ eine Durchblickstelle bzw. einen Durchblickpunkt des Brillenglases in einer vorgegebenen oder vorgebbaren Blickrichtung bezeichnen;
   - Vorgabe einer Funktion $r_0 = g(A1)$, welche die Abhängigkeit einer Pupillengröße $r_0$ von der Objektentfernung $A1$ beschreibt;
   - Ermitteln einer Pupillengröße für den zumindest einen Hauptstrahl (10) anhand des Objektabstandsmodells $A1(x, y)$ und der vorgegebenen Funktion $r_0 = g(A1)$.

8. Verfahren gemäß einem der vorangegangenen Ansprüche, wobei das zu optimierende Brillenglas ein progressives Brillenglas ist.

9. Vorrichtung zum Berechnen und Optimieren eines Brillenglases umfassend:

   - eine Flächenmodelldatenbank zum Vorgeben zumindest einer Fläche für das zu berechnende bzw. optimierende Brillenglas;
   - Hauptstrahlermittlungsmittel zum Ermitteln des Verlaufs eines Hauptstrahls (10) durch zumindest einen Durchblickpunkt ($i$) der zumindest einen Fläche;
   - Primärkoeffizientenermittlungsmittel zum Ermitteln eines ersten primären Satzes ($\mathbf{s}_{io}$) und eines zweiten primären Satzes ($\mathbf{e}_{iok}$) von Koeffizienten der lokalen Aberration einer von dem zumindest einen Durchblickpunkt ($i$) auslaufenden lokalen Wellenfront (18) in. einer Umgebung des Hauptstrahls (10), wobei der erste primäre Satz von Koeffizienten ($\mathbf{s}_{io}$) die sphärische und astigmatische Aberration der auslaufenden lokalen Wellenfront und der zweite primäre Satz von Koeffizienten ($\mathbf{e}_{iok}$) eine weitere Aberration höherer Ordnung (k > 2) der auslaufenden lokalen Wellenfront festlegt;
   - eine Propagationsmodelldatenbank zum Vorgeben zumindest einer Funktion $\mathbf{e}_{pk} = f(\mathbf{e}_{ok})$, welche einem zweiten primären Satz von Koeffizienten ($\mathbf{e}_{ok}$) einen zweiten sekundären Satz von Koeffizienten ($\mathbf{e}_{pk}$) zuordnet, der die Aberration höherer Ordnung einer propagierten Wellenfront festlegt;
   - Sekundärkoeffizientenermittlungsmittel zum Ermitteln einer Aberration höherer Ordnung einer entlang der Hauptstrahls (10) ausgehend von dem zumindest einen Durchblickpunkt ($i$) propagierten lokalen Wellenfront in Abhängigkeit von zumindest dem zweiten primären Satz von Koeffizienten ($\mathbf{e}_{iok}$) anhand der vorgegebenen Funktion $\mathbf{e}_{px} = f(\mathbf{e}_{ok})$; und
   - Berechnungs- oder Optimierungsmittel, welche ausgelegt sind, die zumindest eine Fläche des Brillenglases unter Berücksichtigung der ermittelten Aberration höherer Ordnung der propagierten lokalen Wellenfront zu berechnen oder zu optimieren,
   wobei die Funktion $\mathbf{e}_{pk} = f(\mathbf{e}_{ok})$ als eine lineare Funktion $\mathbf{e}_{pk} = \mathbf{B}_k(\mathbf{e}_{ok} + \mathbf{r}_k)$ vorgegeben ist, in der der Proportionalitätsterm $\mathbf{B}_k$ vom ersten primären Satz von Koeffizienten ($\mathbf{s}_{io}$) aber nicht vom zweiten primären Satz von Koeffizienten ($\mathbf{e}_{ok}$) abhängt.

10. Computerprogrammerzeugnis, welches ausgelegt ist, wenn geladen und ausgeführt auf einem Computer, ein Verfahren zum Berechnen oder Optimieren eines Brillenglases gemäß einem der Ansprüche 1 bis 8 durchzuführen.

11. Speichermedium mit darauf gespeichertem Computerprogramm, wobei das Computerprogramm ausgelegt ist, wenn geladen und ausgeführt auf einem Computer, ein Verfahren zum Berechnen oder Optimieren eines Brillenglases gemäß einem der Ansprüche 1 bis 8 durchzuführen.

12. Verfahren zum Herstellen eines Brillenglases umfassend:

   Berechnen oder Optimieren eines Brillenglases nach dem Verfahren zum Berechnen oder Optimieren eines Brillenglases gemäß einem der Ansprüche 1 bis 8;
   Fertigen des so berechneten oder optimierten Brillenglases.

13. Vorrichtung zum Herstellen eines Brillenglases umfassend:

   Berechnungs- oder Optimierungsmittel, welche ausgelegt sind, das Brillenglas nach einem Verfahren zum Berechnen oder Optimieren eines Brillenglases gemäß einem der Ansprüche 1 bis 8 zu berechnen oder zu optimieren;
   Bearbeitungsmittel, welche ausgelegt sind, das Brillenglas fertig zu bearbeiten.

**Claims**

1. Computer-implemented method for calculating or optimising a spectacle lens comprising the steps:

   • specifying at least one surface for the spectacle lens to be calculated or optimised;
   • determining the course of a principal ray (10) through at least one viewing point (i) of the at least one surface;
   • determining a first primary set ($s_{io}$) and a second primary set ($e_{iok}$) of coefficients of the local aberration of a local wavefront (18) extending from the at least one viewing point (i) in a surrounding area of the principal ray (10), wherein the first primary set of coefficients ($s_{io}$) defines the spherical and astigmatic aberration of the extending local wavefront and the second primary set of coefficients ($e_{iok}$) defines a further aberration of higher order (k > 2) of the extending local wavefront;
   • specifying at least one function $e_{pk} = f(e_{ok})$, which assigns to a second primary set of coefficients ($e_{ok}$) a second secondary set of coefficients ($e_{pk}$), which defines the aberration of higher order of a propagated wavefront;
   • determining an aberration of higher order of a local wavefront propagated along the principal ray (10) and extending from the at least one viewing point *(i)* as a function of at least the second primary set of coefficients ($e_{iok}$) on the basis of the specified function $e_{pk} = f(e_{ok})$; and
   • calculating or optimising the at least one surface of the spectacle lens taking into consideration the determined aberration of higher order of the propagated local wavefront,
   wherein the function $e_{pk} = f(e_{ok})$ is specified as a linear function $e_{px} = B_k(e_{ok} + r_k)$, in which the proportionality term $B_k$ is dependent on the first primary set of coefficients ($s_{io}$), but not on the second primary set of coefficients ($e_{ok}$).

2. Method according to claim 1, wherein the determination of a first primary set of coefficients includes a determination of a power vector $S_O = \begin{pmatrix} S_{oxx} \\ S_{oxy} \\ S_{oyy} \end{pmatrix}$, wherein the determination of a second primary set of coefficients includes a determination of a coma vector $e_{o3} = \begin{pmatrix} E_{oxxx} \\ E_{oxxy} \\ E_{oxyy} \\ E_{oyyy} \end{pmatrix}$ and wherein the function

$$e_{p3} = \gamma \begin{pmatrix} \beta_y^{-3} & 3\beta_y^{-2}\tfrac{d}{n}S_{xy} & 3\beta_y^{-1}(\tfrac{d}{n}S_{xy})^2 & (\tfrac{d}{n}S_{xy})^3 \\ \beta_y^{-2}\tfrac{d}{n}S_{xy} & \beta_y^{-1}(\tfrac{1}{\gamma}+3(\tfrac{d}{n}S_{xy})^2) & \tfrac{1}{\gamma}\tfrac{d}{n}S_{xy}+3(\tfrac{d}{n}S_{xy})^3 & \beta_x^{-1}(\tfrac{d}{n}S_{xy})^2 \\ \beta_y^{-1}(\tfrac{d}{n}S_{xy})^2 & \tfrac{1}{\gamma}\tfrac{d}{n}S_{xy}+3(\tfrac{d}{n}S_{xy})^3 & \beta_x^{-1}(\tfrac{1}{\gamma}+3(\tfrac{d}{n}S_{xy})^2) & \beta_x^{-2}\tfrac{d}{n}S_{xy} \\ (\tfrac{d}{n}S_{xy})^3 & 3\beta_x^{-1}(\tfrac{d}{n}S_{xy})^2 & 3\beta_x^{-2}\tfrac{d}{n}S_{xy} & \beta_x^{-3} \end{pmatrix} e_{o3}$$

   with $\gamma = \dfrac{1}{1 - \tfrac{d}{n}S_{oxx} - (\tfrac{d}{n}S_{oxy})^2 - \tfrac{d}{n}S_{oyy} + (\tfrac{d}{n})^2 S_{oxx}S_{oyy}}$, $\beta_x = \dfrac{1}{1 - \tfrac{d}{n}S_{oxx}}$ and $\beta_y = \dfrac{1}{1 - \tfrac{d}{n}S_{oyy}}$ is

   given as at least one function $e_{p3} = f(e_{o3})$.

3. Method according to claim 1 or 2, wherein the determination of a first primary set of coefficients includes a determination of a power vector $S_O = \begin{pmatrix} S_{oxx} \\ S_{oxy} \\ S_{oyy} \end{pmatrix}$, wherein the determination of a second primary set of coefficients includes a determination of a coma vector $e_{o3} = \begin{pmatrix} E_{oxxx} \\ E_{oxxy} \\ E_{oxyy} \\ E_{oyyy} \end{pmatrix}$ and a determination of a spherical aberration vector

$$e_{o3} = \begin{pmatrix} E_{oxxxx} \\ E_{0xxxy} \\ E_{oxxyy} \\ E_{oxyyy} \\ E_{oyyyy} \end{pmatrix}, \text{ and wherein the function}$$

$$\mathbf{e}_{p4} = \begin{pmatrix} \beta_x^4 & \cdots & & \cdots & 0 \\ \vdots & \beta_x^3\beta_y^{1} & & & \vdots \\ & & \beta_x^2\beta_y^2 & & \\ \vdots & & & \beta_x^1\beta_y^3 & \vdots \\ 0 & & \cdots & & \beta_y^4 \end{pmatrix}$$

$$\left( \mathbf{e}_{b4} + \frac{d}{n} \begin{pmatrix} 3\left(\beta_x E_{oxxx}^1 + \beta_y E_{oxxy}^2 - \frac{S_{oxx}^4}{n^2}\right) \\ 3E_{oxxy}\left(\beta_x E_{oxxx} + \beta_y E_{oxyy}\right) \\ \beta_x(2E_{oxxy}^2 + E_{oxxx}E_{oxyy}) + \beta_y(2E_{oxyy}^2 + E_{oxxy}E_{oyyy}) - \left(\frac{S_{oxx}S_{oyy}}{n}\right)^2 \\ 3E_{oxyy}\left(\beta_x E_{oxxy} + \beta_y E_{oyyy}\right) \\ 3\left(\beta_x E_{oxyy}^2 + \beta_y E_{oyyy}^2 - \frac{S_{oyy}^4}{n^2}\right) \end{pmatrix} \right)$$

with $\beta_x = \dfrac{1}{1 - d/n\, S_{oxx}}$ and $\beta_y = \dfrac{1}{1 - d/n\, S_{oyy}}$ is given as at least one function $e_{pk} = f(e_{ok})$.

4. Method according to one of the preceding claims, additionally including determination of an angle $\alpha$ between a first refraction plane of the principal ray on a first surface of the spectacle lens and a second refraction plane of the principal ray on a second surface of the spectacle lens, wherein the determination of an aberration of higher order includes

   • determining a second secondary set ($e_{ipk}$) of coefficients of the local aberration of the propagated wavefront; and
   • determining a transformed second secondary set ($\tilde{e}_{ipk}$) of coefficients as a function of the specific angle $\alpha$.

5. Method according to one of the preceding claims, which additionally includes acquisition of prescription data $V$, wherein the prescription data comprise data relating to the spherical effect $Sphv$, the amount of astigmatism $Zyl_V$, the axis of astigmatism $Axis_V$ and also at least one further refraction of higher order $HOAv$.

6. Method according to claim 6, wherein the acquisition of prescription data includes acquisition of first prescription data for a first object distance and of second prescription data for a second object distance.

7. Method according to one of the preceding claims, additionally including:

   • specifying an object distance model $A1(x, y)$, wherein $A1$ denotes the object distance and $(x, y)$ denotes a viewing location or viewing point of the spectacle lens in a predetermined or predeterminable viewing direction;
   • specifying a function $r_0 = g(A1)$, which describes the dependence of a pupil size $r_0$ on the object distance $A1$;
   • determining a pupil size for the at least one principal ray (10) on the basis of the object distance model $A1(x,$

$y$) and the predetermined function $r_0 = g(A1)$.

8. Method according to one of the preceding claims, wherein the spectacle lens to be optimised is a progressive spectacle lens.

9. Device for calculating and optimising a spectacle lens comprising:

- a surface model data bank for specifying at least one surface for the spectacle lens to be calculated or optimised;
- principal ray determination means for determining the course of the principal ray (10) through at least one viewing point ($i$) of the at least one surface;
- primary coefficient determination means for determining a first primary set ($s_{io}$) and a second primary set ($e_{iok}$) of coefficients of the local aberration of a local wavefront (18) extending from the at least one viewing point ($i$) in a surrounding area of the principal ray (10), wherein the first primary set of coefficients ($s_{io}$) defines the spherical and astigmatic aberration of the extending local wavefront and the second primary set of coefficients ($e_{iok}$) defines a further aberration of higher order (k > 2) of the extending local wavefront;
- a propagation model data bank for specifying at least one function $e_{pk} = f(e_{ok})$, which assigns to a second primary set of coefficients ($e_{ok}$) a second secondary set of coefficients ($e_{pk}$), which defines the aberration of higher order of a propagated wavefront;
- secondary coefficient determination means for determining an aberration of higher order of a local wavefront propagated along the principal ray (10) and extending from the at least one viewing point ($i$) as a function of at least the second primary set of coefficients ($e_{iok}$) on the basis of the specified function $e_{pk} = f(e_{ok})$; and
- calculation or optimisation means, which are designed to calculate or optimise the at least one surface of the spectacle lens taking into consideration the determined aberration of higher order of the propagated local wavefront,

wherein the function $e_{px} = f(e_{ok})$ is specified as a linear function $e_{px} = B_k(e_{ok} + r_k)$, in which the proportionality term $B_k$ is dependent on the first primary set of coefficients ($s_{io}$), but not on the second primary set of coefficients ($e_{ok}$).

10. Computer program product, which, when installed and implemented on a computer, is designed to conduct a method for calculating or optimising a spectacle lens according to one of claims 1 to 8.

11. Storage medium with computer program stored thereon, wherein, when installed and implemented on a computer, the computer program is designed to conduct a method for calculating or optimising a spectacle lens according to one of claims 1 to 8.

12. Process for producing a spectacle lens comprising:

calculating or optimising a spectacle lens using the method for calculating or optimising a spectacle lens according to one of claims 1 to 8; fabricating the thus calculated or optimised spectacle lens.

13. Device for producing a spectacle lens comprising:

calculation or optimisation means, which are designed to calculate or optimise the spectacle lens using a method for calculating or optimising a spectacle lens according to one of claims 1 to 8; machining means, which are designed to finish the spectacle lens.

**Revendications**

1. Procédé implémenté d'un ordinateur pour le calcul ou l'optimisation d'un verre de lunettes, comprenant les étapes de :

- spécification d'au moins une surface pour le verre de lunettes à calculer, respectivement à optimiser ;
- détermination du trajet d'un rayon principal (10) passant par au moins un point de vision ($i$) de la au moins une surface ;
- détermination d'un premier ensemble primaire ($\boldsymbol{S}_{io}$) et d'un deuxième ensemble primaire ($e_{iok}$) de coefficients d'aberration locale d'au moins un front d'onde (18) local partant d'au moins un point de vision (i) dans un environnement du rayon principal (10), le premier ensemble primaire de coefficients ($\boldsymbol{S}_{io}$) déterminant l'aberration

sphérique et astigmatique du front d'onde local sortant et le deuxième ensemble primaire de coefficients ($e_{iok}$) déterminant une autre aberration d'ordre supérieur (k > 2) du front d'onde local sortant ;

- spécification d'au moins une fonction $e_{pk}$ = f($e_{ok}$) qui associe à un deuxième ensemble primaire de coefficients ($e_{ok}$) un deuxième ensemble secondaire de coefficients ($e_{pk}$) qui détermine l'aberration d'ordre supérieur d'un front d'onde en propagation ;

- détermination d'une aberration d'ordre supérieur d'un front d'onde local en propagation le long d'un rayon principal (10) partant d'au moins un point de vision (i) en fonction du au moins deuxième ensemble primaire de coefficients (*$e_{iok}$*) au moyen de la fonction $e_{pk}$ = f($e_{ok}$) prédéterminée ; et

- calcul ou optimisation d'au moins une surface du verre de lunettes en tenant compte de l'aberration d'ordre supérieur du front d'onde local en propagation déterminée,

la fonction $e_{pk}$ = f($e_{ok}$) étant déterminée sous la forme d'une fonction linéaire $e_{pk}$ = $B_k$ ($e_{ok}$ + $r_k$), dans laquelle le terme de proportionnalité $B_k$ dépend du premier ensemble primaire de coefficients (*$S_{io}$*) mais non du deuxième ensemble primaire de coefficients ($e_{ok}$).

2. Procédé selon la revendication 1, dans lequel la détermination d'un premier ensemble primaire de coefficients comprend la détermination du vecteur de puissance $\mathbf{s}_o = \begin{bmatrix} S_{oxx} \\ S_{oxy} \\ S_{oyy} \end{bmatrix}$, la détermination d'un deuxième ensemble primaire de coefficients comprenant la détermination d'un vecteur de coma $\mathbf{e}_{o3} = \begin{pmatrix} E_{oxx} \\ E_{oxy} \\ E_{oxyy} \\ E_{oyyy} \end{pmatrix}$

et au moins une fonction

$$\mathbf{e}_{p3} = \gamma^3 \begin{pmatrix} \beta_y^{-3} & 3\beta_y^{-2}\,d/_n S_{xy} & 3\beta_y^{-1}(d/_n S_{xy})^2 & (d/_n S_{xy})^3 \\ \beta_y^{-2}\,d/_n S_{xy} & \beta_y^{-1}(1/_\gamma + 3(d/_n S_{xy})^2) & 2/_\gamma\,d/_n S_{xy} + 3(d/_n S_{xy})^3 & \beta_x^{-1}(d/_n S_{xy})^2 \\ \beta_y^{-1}(d/_n S_{xy})^2 & 2/_\gamma\,d/_n S_{xy} + 3(d/_n S_{xy})^3 & \beta_x^{-1}(1/_\gamma + 3(d/_n S_{xy})^2) & \beta_x^{-2}\,d/_n S_{xy} \\ (d/_n S_{xy})^3 & 3\beta_x^{-1}(d/_n S_{xy})^2 & 3\beta_x^{-2}\,d/_n S_{xy} & \beta_x^{-3} \end{pmatrix} \mathbf{e}_{o3}$$

avec

$$\gamma = \frac{1}{1 - d/_n S_{oxx} - (d/_n S_{oxy})^2 - d/_n S_{oyy} + (d/_n)^2 S_{oxx} S_{oyy})}$$

$$\beta_x = \frac{1}{1 - d/_n S_{oxx}}$$

et

$$\beta_y = \frac{1}{1 - d/_n S_{oyy}}$$

est prédéfinie en tant que fonction $\mathbf{e}_{p3} = f(\mathbf{e}_{o3})$.

3. Procédé selon les revendications 1 ou 2, dans lequel la détermination d'un premier ensemble primaire de coefficients comprend la détermination d'un vecteur de puissance $\mathbf{s}_o = \begin{pmatrix} S_{oxx} \\ S_{oxy} \\ S_{oyy} \end{pmatrix}$, dans lequel la détermination d'un deuxième ensemble primaire de coefficients comprend la détermination d'un vecteur de coma $\mathbf{e}_{o3} = \begin{pmatrix} E_{oxxx} \\ E_{oxxy} \\ E_{oxyy} \\ E_{oyyy} \end{pmatrix}$ et la détermination d'un vecteur d'aberration sphérique $\mathbf{e}_{o3} = \begin{pmatrix} E_{oxxxx} \\ E_{oxxxy} \\ E_{oxxyy} \\ E_{oxyyy} \\ E_{oyyyy} \end{pmatrix}$ , et où au moins une fonction

$$\mathbf{e}_{p4} = \begin{pmatrix} \beta_x^4 & \cdots & & \cdots & 0 \\ \vdots & \beta_x^3\beta_y^1 & & & \vdots \\ & & \beta_x^2\beta_y^2 & & \\ \vdots & & & \beta_x^1\beta_y^3 & \vdots \\ 0 & & & \cdots & \beta_y^4 \end{pmatrix}$$

$$\left( \mathbf{e}_{o4} + \frac{d}{n} \begin{pmatrix} 3\left(\beta_x E_{oxxx}^2 + \beta_y E_{oxxy}^2 - \dfrac{S_{oxx}^4}{n^2}\right) \\ 3E_{oxxy}\left(\beta_x E_{oxxx} + \beta_y E_{oxyy}\right) \\ \beta_x(2E_{oxxy}^2 + E_{oxxx}E_{oxyy}) + \beta_y(2E_{oxyy}^2 + E_{oxyy}E_{oyyy}) - \left(\dfrac{S_{oxx}S_{oyy}}{n}\right)^2 \\ 3E_{oxyy}\left(\beta_x E_{oxxy} + \beta_y E_{oyyy}\right) \\ 3\left(\beta_x E_{oxyy}^2 + \beta_y E_{oyyy}^2 - \dfrac{S_{oyy}^4}{n^2}\right) \end{pmatrix} \right)$$

avec

$$\beta_x = \frac{1}{1 - \frac{d}{n}S_{oxx}} \qquad \text{et} \qquad \beta_y = \frac{1}{1 - \frac{d}{n}S_{oyy}}$$

est prédéfinie comme étant la fonction $\mathbf{e}_{pk} = f(\mathbf{e}_{ok})$.

4. Procédé selon l'une des revendications précédentes, comprenant en outre la détermination d'un angle $\alpha$, entre un premier plan de diffraction du rayon principal au niveau d'une première surface du verre de lunettes et d'un deuxième plan de diffraction du rayon principal au niveau d'une deuxième surface du verre de lunettes, la détermination d'une aberration d'ordre supérieur comportant

- la détermination d'un deuxième ensemble secondaire ($e_{ipk}$) de coefficients de l'aberration locale du front d'onde en propagation ; et

- la détermination d'un deuxième ensemble secondaire transformé $(\breve{e}_{ipk})$ de coefficients en fonction de l'angle α déterminé.

5. Procédé selon l'une des revendications précédentes, lequel comprend en outre une détermination de données de prescription V, les données de prescription V comprenant des données concernant l'effet sphérique *Sphv,* la contribution de l'astigmatisme *Zylv,* l'axe d'astigmatisme *Achsev,* ainsi qu'au moins une autre réfraction d'ordre supérieur *HOAv.*

6. Procédé selon la revendication 6, dans lequel la détermination des données de prescription comprend une détermination de premières données de prescription pour un premier éloignement d'objet et de deuxièmes données de prescription pour un deuxième éloignement d'objet.

7. Procédé selon l'une des revendications précédentes, comprenant en outre :

- la spécification d'un modèle de distance focale Al(x,y), où Al représente la distance à l'objet et *(x,y)* représente une localisation de vision, respectivement, un point de vision, du verre de lunettes dans une direction de vision prédéterminée ou pouvant être prédéterminée ;
- la spécification d'une fonction $r_0$ = g(Al), laquelle décrit la relation entre la taille de la pupille $r_0$ et l'éloignement à l'objet Al ;
- la détermination d'une taille de pupille pour au moins un rayon principal (10) au moyen du modèle de distance focale Al(x,y) et de la fonction prédéterminée $r_0$ = g(Al).

8. Procédé selon l'une des revendications précédentes, dans lequel le verre de lunettes à optimiser est un verre de lunettes progressif.

9. Dispositif pour le calcul et l'optimisation d'un verre de lunettes comprenant :

- une banque de données de surfaces modèles en vue de la prescription d'au moins une surface pour un verre de lunettes à calculer, respectivement, à optimiser ;
- un moyen de détermination du rayon principal pour la détermination de la trajectoire d'un rayon principal (10) par au moins un point de vision *(i)* d'au moins une surface ;
- un moyen de détermination des coefficients primaires pour la détermination d'un premier ensemble primaire *($S_{io}$)* et d'un deuxième ensemble primaire *($e_{iok}$)* de coefficients de l'aberration locale d'au moins un front d'onde (18) local partant d'un point de vision *(i)* dans un lieu environnant du rayon principal (10), le premier ensemble primaire *($S_{io}$)* de coefficients définissant l'aberration sphérique et astigmatique du front d'ondes local partant et le deuxième ensemble primaire *($e_{iok}$)* de coefficients définissant une autre aberration d'ordre supérieur (k > 2) du front d'ondes local partant ;
- une banque de données de propagations modèles pour la spécification d'au moins une fonction $e_{pk}$ = f($e_{ok}$), laquelle associe un deuxième ensemble secondaire ($e_{pk}$) de coefficients à un deuxième ensemble primaire ($e_{ok}$) de coefficients, qui définit l'aberration d'ordre supérieur d'un front d'ondes local en propagation ;
- un moyen de détermination de coefficients secondaires pour la détermination d'une aberration d'ordre supérieur d'un front d'ondes local en propagation le long du rayon principal (10) partant d'au moins un point de vision *(i)* en fonction d'au moins un deuxième ensemble primaire *($e_{iok}$)* de coefficients au moyen de la fonction prédéterminée $e_{pk}$ = f($e_{ok}$) ; et
- un moyen de calcul ou d'optimisation, lequel est mis au point pour calculer ou optimiser au moins une surface du verre de lunettes en tenant compte de l'aberration d'ordre supérieur du front d'ondes local en propagation déterminée,
la fonction $e_{pk}$ = f($e_{ok}$) étant prédéfinie comme une fonction linéaire $e_{pk}$ = $B_k$($e_{ok}$ + $r_k$), dans laquelle le terme de proportionnalité $B_k$ dépend du premier ensemble primaire *($S_{io}$)* de coefficients, mais non du deuxième ensemble primaire ($e_{ok}$) de coefficients.

10. Résultat d'un programme d'ordinateur, lequel est mis au point, lorsqu'il est chargé et exécuté sur un ordinateur, pour exécuter un procédé de calcul ou d'optimisation d'un verre de lunettes selon l'une des revendications 1 à 8.

**11.** Moyen de stockage comprenant un programme d'ordinateur y étant enregistré, le programme d'ordinateur étant mis au point , lorsqu'il est chargé et exécuté sur un ordinateur, pour exécuter un procédé de calcul ou d'optimisation d'un verre de lunettes selon l'une des revendications 1 à 8.

**12.** Procédé de fabrication d'un verre de lunettes comprenant :

le calcul ou l'optimisation d'un verre de lunettes selon le procédé de calcul ou d'optimisation d'un verre de lunettes selon l'une des revendications 1 à 8 ;
la fabrication du verre de lunettes ainsi calculé ou optimisé.

**13.** Dispositif de fabrication d'un verre de lunettes comprenant :

des moyens de calcul ou d'optimisation, qui sont mis au point pour calculer ou optimiser le verre de lunettes selon un procédé de calcul ou d'optimisation d'un verre de lunettes selon l'une des revendications 1 à 8 ;
des moyens de fabrication, lesquels sont mis au point pour achever la fabrication du verre de lunettes.

# FIG 1

EP 2 710 428 B1

FIG 2

FIG 3

FIG 4

FIG 5

## FIG 6

**ST18**

$$c_2^0, c_2^2, c_2^{-2}, \ldots = f(r, S'_{xx}, S'_{xy}, S'_{yy}, K'_{xxx} \ldots)$$

Sph, Zyl, Achse = $f(r, c_2^0, c_2^2, c_2^{-2}, \ldots)$

**ST20**

**Auge:** Subjektive Refraktion Sph, zyl, Achse für Ferne und Nähe

<u>Objektive Refraktion inkl. HOA (WF):</u> $(c_2^0, c_2^2, c_2^{-2} \ldots \ldots)$

Pupillendurchmesser (mit Aberrometer)

**ST22**

<u>Kombination Subjektiv/Objektiv</u>

<u>unter Berücksichtigung von</u>

<u>Objektabstand, Blickrichtung,</u>

<u>Pupillendurchmesser</u>

**ST10**

<u>HOA-</u>Wavefront-Tracing

**ST12**

Brillenglas

Lokale Abbildungsfehler 2. Ordnung

$(S'_{xx}, S'_{xy}, S'_{yy})$

+ HOA $(K'_{xxx}, K'_{xxy}, K'_{xyy} \ldots)$

**ST14**

<u>Endliche Pupillenöffnung</u>

$(c_2^0, c_2^2, c_2^{-2}, \ldots)$

**ST16**

<u>Endliche Pupillenöffnung</u> (Sph, Zyl, Achse)

**ST24**

**Kombination BG/Auge K**

K (Ref, Ast) = BG (Sph, Zyl, Achse ) – Auge (Sph, Zyl, Achse )

**ST26**

**Zielfunktion** (Istwerte –Sollwerte)

K (Ref, Ast) – S (Ref, Ast)

**ST28**

**Sollwerte S**

S (Ref, Ast)

**IN DER BESCHREIBUNG AUFGEFÜHRTE DOKUMENTE**

**In der Beschreibung aufgeführte Patentdokumente**

- DE 10313275

- WO 2008089999 A1

**In der Beschreibung aufgeführte Nicht-Patentliteratur**

- *J. Opt. Soc. Am. A,* vol. 27, 218-237

- **JASON PORTER et al.** Adaptive Optics for Vision Science. Wiley, 2006, 522